(19) Europäisches Patentamt / European Patent Office / Office européen des brevets

(11) **EP 4 229 130 B1**

(12) **EUROPEAN PATENT SPECIFICATION**

(45) Date of publication and mention
of the grant of the patent:
**01.01.2025 Bulletin 2025/01**

(21) Application number: **20804377.8**

(22) Date of filing: **15.10.2020**

(51) International Patent Classification (IPC):
**C08L 23/26** *(2006.01)* **C08L 23/12** *(2006.01)*
**C08L 23/16** *(2006.01)* **C08K 5/10** *(2006.01)*

(52) Cooperative Patent Classification (CPC):
(C-Sets available)
**C08L 23/12;** C08L 2023/40; C08L 2023/42;
C08L 2205/22 (Cont.)

(86) International application number:
**PCT/US2020/055863**

(87) International publication number:
**WO 2022/081164 (21.04.2022 Gazette 2022/16)**

(54) **POLYMER COMPOSITIONS AND METHODS FOR MAKING THE SAME**

POLYMERZUSAMMENSETZUNGEN UND VERFAHREN ZUR HERSTELLUNG DAVON

COMPOSITIONS DE POLYMÈRE ET LEURS PROCÉDÉS DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.08.2023 Bulletin 2023/34**

(73) Proprietor: **Milliken & Company
Spartanburg, South Carolina 29303 (US)**

(72) Inventors:
• **FEW, Chip S.
Spartanburg, South Carolina 29303 (US)**
• **SCANLAN, James C.
Spartanburg, South Carolina 29303 (US)**
• **KELLER, Keith
Spartanburg, South Carolina 29303 (US)**

(74) Representative: **Hoffmann Eitle
Patent- und Rechtsanwälte PartmbB
Arabellastraße 30
81925 München (DE)**

(56) References cited:
**EP-A1- 3 347 389    WO-A1-2018/156278**

(52) Cooperative Patent Classification (CPC): (Cont.)

C-Sets
**C08L 23/12, C08L 23/16, C08K 5/10**

**Description**

TECHNICAL FIELD OF THE INVENTION

This application is directed to polymer compositions exhibiting a desirable combination of a relatively high melt flow rate and relatively high impact resistance and methods for making such polymer compositions.

BACKGROUND

The melt flow rate (MFR) of a polymer resin generally is a function of its molecular weight. In general, increasing the melt flow rate allows the resin to be processed at lower temperatures and to fill complex part geometries. Various prior art methods of increasing the melt flow rate involve melt-blending the resin in an extruder with a compound capable of generating free radicals, such as a peroxide. The weight average molecular weight of the polymer is reduced and the MFR is increased. Increasing the melt flow rate by decreasing the molecular weight of the polyolefin polymer, however, has been found in many cases to have a detrimental effect on the strength and impact resistance of the modified polymer. For example, decreasing the molecular weight of the polymer can significantly lower the impact resistance of the polymer. This lowered impact resistance can make the polymer unsuitable for use in certain applications or end uses. Accordingly, when extant technologies are utilized, one must strike a compromise between increasing the melt flow rate and undesirably decreasing the impact resistance of the polymer. This compromise often means that the melt flow rate is not increased to the desired level, which requires higher processing temperatures and/or results in lower throughputs.

In addition, the properties of the starting polymer affect the ultimate impact resistance that can be achieved. In particular, polymers that appear to be relatively similar in respect of certain properties, such as ethylene content, have been observed to exhibit very different impact resistance when modified in similar ways. These differences in performance appear to be the result of multiple different but interrelated properties of the starting polymer. The unknown interplay between these properties has made it so far difficult to reliably select a starting polymer that can be modified to provide improved melt flow while meeting the desired level of impact resistance, such as providing partial break or non-break behavior in impact resistance testing (e.g., notched Izod and/or Charpy impact testing).

WO 2018/156 278 A1 and EP3 347 389 A1 deal with heterophasic thermoplastic polymer compositions comprising a compatibiliser and focusing on increased impact resistance.

A need therefore remains for additives and processes that can produce polymer compositions having an increased melt flow while improving the impact resistance of the polymer to exhibit partial break or non-break behavior. The methods and compositions described in this application seek to address this continued need.

BRIEF SUMMARY OF THE INVENTION

In a first embodiment, the invention provides a method for making a modified polymer composition, the method comprising the steps of (a) providing a thermoplastic polymer; (b) providing a compatibilizing agent; (c) providing a peroxide compound; (d) feeding the thermoplastic polymer, the compatibilizing agent, and the peroxide compound to a melt mixing apparatus; and (e) processing the thermoplastic polymer, the compatibilizing agent, and the peroxide compound in the melt mixing apparatus at a temperature that exceeds the melting point of the thermoplastic polymer to form a polymer composition.

In a second embodiment, the invention provides a method for making a modified polymer composition, the method comprising the steps of (a) providing a thermoplastic polymer; (b) providing a compatibilizing agent; (c) providing a peroxide compound; (d) combining the thermoplastic polymer, the compatibilizing agent, and the peroxide compound to produce an intermediate composition; (e) heating the intermediate composition to a temperature that exceeds the melting point of the thermoplastic polymer; (f) mixing the intermediate composition to produce a polymer composition; and (g) cooling the polymer composition to a temperature at which it solidifies.

In a third embodiment, the invention provides a modified polymer composition comprising (a) a heterophasic thermoplastic polymer composition comprising a propylene continuous phase and an ethylene discontinuous phase and (b) a compatibilizing agent.

DETAILED DESCRIPTION OF THE INVENTION

In a first embodiment, the invention provides a method for making a polymer composition, the method comprising the steps of (a) providing a thermoplastic polymer; (b) providing a compatibilizing agent; (c) providing a peroxide compound; (d) feeding the thermoplastic polymer, the compatibilizing agent, and the peroxide compound to a melt mixing apparatus; and (e) processing the thermoplastic polymer, the compatibilizing agent, and the peroxide compound in the melt mixing apparatus at a temperature that exceeds the melting point of the thermoplastic polymer to form a polymer composition.

The method of the invention can utilize any suitable thermoplastic polymer. In a preferred embodiment, the thermoplastic polymer is a polyolefin polymer. More specifically, the thermoplastic polymer preferably is a polyolefin polymer selected from the group consisting of polypropylenes (e.g., polypropylene homopolymers, polypropylene copolymers, and mixtures thereof), polyethylenes (e.g., high density polyethylene polymers, medium density polyethylene polymers, low-density polyethylene polymers, linear low-density polyethylene polymers, and mixtures thereof), and mixtures thereof.

In another preferred embodiment, the thermoplastic polymer is a heterophasic thermoplastic polymer composition comprising a continuous phase and a discontinuous phase, such as a polypropylene impact copolymer. Preferably, the continuous phase is a propylene polymer phase and the discontinuous phase is an ethylene polymer phase. In a preferred embodiment, the continuous phase is selected from the group consisting of polypropylene homopolymers and copolymers of propylene and up to 50 wt.% of one or more comonomers selected from the group consisting of ethylene and $C_4$-$C_{10}$ $\alpha$-olefin monomers. Preferably, the propylene content of the continuous phase is about 80 wt.% or more. The continuous phase preferably is from about 5 to about 95 wt.% (e.g., about 5 to about 90 wt.%, about 5 to about 85 wt.%, or about 5 to about 80 wt.%) of the total weight of the heterophasic thermoplastic polymer composition.

In another preferred embodiment, the discontinuous phase is selected from the group consisting of ethylene homopolymers and copolymers of ethylene and a comonomer selected from the group consisting of $C_3$-$C_{10}$ $\alpha$-olefin monomers. Preferably, the ethylene content of the discontinuous phase is about 8 wt.% or more. More preferably, the ethylene content of the discontinuous phase is from about 8 wt.% to 90 wt.% (e.g., about 8 wt.% to about 80 wt.%). In another preferred embodiment, the ethylene content of the heterophasic thermoplastic polymer composition is from about 5 wt.% to about 30 wt.%.

In a particularly preferred embodiment, the continuous phase is selected from the group consisting of polypropylene homopolymers and copolymers of propylene and up to 50 wt.% of one or more comonomers selected from the group consisting of ethylene and $C_4$-$C_{10}$ $\alpha$-olefin monomers as described above, and the discontinuous phase is selected from the group consisting of ethylene homopolymers and copolymers of ethylene and a comonomer selected from the group consisting of $C_3$-$C_{10}$ $\alpha$-olefin monomers as described above. More preferably, the discontinuous phase is a copolymer of ethylene and propylene.

Examples of heterophasic thermoplastic polymer compositions that may be modified are impact copolymers characterized by a relatively rigid, polypropylene homopolymer matrix (continuous phase) and a finely dispersed phase of ethylene-propylene rubber (EPR) particles. Polypropylene impact copolymers may be made in a two-stage process, where the polypropylene homopolymer is polymerized first and the ethylene-propylene rubber is polymerized in a second stage. Alternatively, the impact copolymer may be made in three or more stages, as is known in the art. Suitable processes may be found in the following references: US 5,639,822 and US 7,649,052 B2. Examples of suitable processes to make polypropylene impact copolymers are Spheripol®, Unipol®, Mitsui process, Novolen process, Spherizone®, Catalloy®, Chisso process, Innovene®, Borstar®, Mitsubishi Horizone process, and Sinopec process. These processes could use heterogeneous or homogeneous Ziegler-Natta or metallocene catalysts to catalyze the polymerization reaction.

The heterophasic thermoplastic polymer composition may be formed by melt mixing two or more polymer compositions, which form at least two distinct phases in the solid state. By way of example, the heterophasic thermoplastic polymer composition may comprise three distinct phases. The heterophasic thermoplastic polymer composition may result from melt mixing two or more types of recycled polyolefin compositions. Accordingly, the step of providing "a heterophasic thermoplastic polymer" as described herein includes employing a polymer composition in the process that is already heterophasic, as well as melt mixing two or more polymer compositions during the process, wherein the two or more polymer compositions form a heterophasic thermoplastic polymer. For example, the heterophasic thermoplastic polymer composition may be made by melt mixing a polypropylene homopolymer and an ethylene /$\alpha$-olefin copolymer, such as an ethylene / butene elastomer. Examples of suitable copolymers would be Engage™, Exact®, Vistamaxx®, Versify™, INFUSE™, Nordel™, Vistalon®, Exxelor™, and Affinity™. Furthermore, it will be understood that the miscibility of the polyolefin polymer components that form the heterophasic thermoplastic polymer composition may vary when the composition is heated above the melting point of the continuous phase in the system, yet the system will form two or more phases when it cools and solidifies. Examples of heterophasic thermoplastic polymers can be found in US 8,207,272 B2 and EP 1 391 482 B1.

In one embodiment of the invention, the heterophasic thermoplastic polymer composition used in the method does not have any polyolefin constituents with unsaturated bonds. In particular, when the heterophasic thermoplastic polymer composition contains a propylene polymer phase and an ethylene polymer phase, both the propylene polymers in the propylene polymer phase and the ethylene polymers in the ethylene polymer phase are free of unsaturated bonds.

In another embodiment of those embodiments employing a heterophasic thermoplastic polymer composition, in addition to the propylene polymer and ethylene polymer components, the heterophasic thermoplastic polymer composition may include an elastomer, such as elastomeric ethylene copolymers, elastomeric propylene copolymers, styrene block copolymers, such as styrenebutadiene-styrene (SBS), styrene-ethylene-butylene-styrene (SEBS), styrene-ethylene-propylene-styrene (SEPS) and styrene-isoprene-styrene (SIS), plastomers, ethylene-propylene-diene terpolymers, LLDPE, LDPE, VLDPE, polybutadiene, polyisoprene, natural rubber, and amorphous polyolefins. The rubbers may be virgin or recycled.

As noted above, heterophasic thermoplastic polymer compositions that appear similar in many aspects (e.g., impact copolymers having similar monomer contents) have been observed to exhibit very different impact behavior when modified with a peroxide and compatibilizing agent according to the disclosed methods. After extensive experimentation and investigation, the inventors have found that the ultimate impact strength that can be achieved is determined by three properties of the heterophasic thermoplastic polymer composition: (i) the melt flow rate; (ii) the soluble fraction, and (iii) the ethylene content of the soluble fraction. The melt flow rate, which is expressed in units of g/10 min, preferably is measured in accordance with ASTM D1238 or ISO 1133 at 230 °C with a load of 2.16 kg for polypropylene. The soluble fraction is that portion of both the continuous phase and the discontinuous phase that is soluble in a selected solvent. The soluble fraction, which is expressed as a weight percentage (wt.%) of the polymer composition, and the ethylene content of the soluble fraction, which is also expressed as a weight percentage (wt.%), preferably are measured using a Crystex® 42 analyzer (from Polymer Char, Valencia, Spain) and 1,2,4-trichlorobenzene stabilized with 300 ppm of pentaerythritol tetrakis(3-(3,5-di-tert-butyl-4-hydroxyphenyl)propionate). The complete set of testing parameters that are preferably used in analyzing the heterophasic thermoplastic polymer compositions using the Crystex® 42 analyzer is described below in the discussion preceding the examples. In addition to the soluble fraction and ethylene content of the soluble fraction, the Crystex® 42 analyzer can also measure the intrinsic viscosities of the soluble fraction and the crystalline fraction, the ratio of which (i.e., the value obtained by dividing the intrinsic viscosity of the soluble fraction by the intrinsic viscosity of the crystalline fraction) is known as the "β/α" value.

The heterophasic thermoplastic polymer composition preferably possesses a melt flow rate (MFR), a soluble fraction (SF), and an ethylene content of the soluble fraction (C2$_{SF}$) that satisfy the following inequality:

$$(1) \quad 0 < (-0.29 \times MFR) + (1.269 \times SF) - (0.626 \times C2_{SF}) + 5.9.$$

More preferably, the MFR, the SF, and the C2$_{SF}$ satisfy the following inequality:

$$(1a) \quad 0 < (-0.29 \times MFR) + (1.269 \times SF) - (0.626 \times C2_{SF}) + 5.0.$$

Even more preferably, the MFR, the SF, and the C2$_{SF}$ satisfy the following inequality:

$$(1b) \quad 0 < (-0.29 \times MFR) + (1.269 \times SF) - (0.626 \times C2_{SF}) + 4.1.$$

In an alternative preferred embodiment, the heterophasic thermoplastic polymer composition preferably possesses a melt flow rate (MFR), a soluble fraction (SF), and an ethylene content of the soluble fraction (C2$_{SF}$) that satisfy both of the following inequalities:

$$(2) \quad 0 < (1.61 \times SF) + 11.1 - C2_{SF};$$

and

$$(3) \quad 0 < (3.66 \times SF) - 54.3 - MFR.$$

More preferably, the MFR, the SF, and the C2$_{SF}$ satisfy both of the following inequalities:

$$(4) \quad 0 \leq (1.61 \times SF) + 9.6 - C2_{SF};$$

and

$$(5) \quad 0 \leq (3.66 \times SF) - 59.7 - MFR.$$

Even more preferably, the MFR, the SF, and the C2$_{SF}$ satisfy both of the following inequalities:

$$(6) \qquad 0 \le (1.61 \times SF) + 8.1 - C2_{SF};$$

and

$$(7) \qquad 0 \le (3.66 \times SF) - 67.1 - MFR.$$

Heterophasic thermoplastic polymer compositions possessing a melt flow rate, a soluble fraction, and an ethylene content of the soluble fraction that satisfy one or more of the foregoing sets of inequalities (sometimes referred to as "responsive resins" hereafter) have been shown to exhibit a particularly desirable combination of high melt flow rate and high impact strength when modified in accordance with the methods described herein. For example, responsive resins that exhibit relatively high impact resistance prior to modification (e.g., partial break or non-break behavior) can be modified via the disclosed methods to dramatically increase their melt flow rate while maintaining the same degree of impact resistance. Alternatively, for those responsive resins that do not exhibit high impact resistance prior to modification, the impact resistance of such polymer compositions can be increased so that the material exhibits partial break or non-break failures under both Izod and Charpy impact testing. These results are especially surprising in light of the fact that these improvements in impact resistance are accompanied by a significant increase in the melt flow rate of the responsive resin. As explained above, an increase in the melt flow rate of a polymer composition typically leads to a decrease in its impact resistance. Such partial break or non-break failure behavior is particularly desired in the industry because it evinces a high degree of impact resistance, meaning that articles made from the modified polymer composition will be suitable for a wider variety of end use applications.

The melt flow rate of the heterophasic thermoplastic polymer composition preferably is about 1 g/10 min or more. The melt flow rate of the heterophasic thermoplastic polymer composition preferably is about 50 g/10 min or less. More preferably, the melt flow rate of the heterophasic thermoplastic polymer composition is about 40 g/10 min or less, about 35 g/10 min or less, or about 30 g/10 min or less. Thus in a series of preferred embodiments, the melt flow rate of the heterophasic thermoplastic polymer composition is about 1 to about 50 g/10 min or about 1 to about 40 g/10 min (e.g., about 5 to about 40 g/10 min, about 8 to about 40 g/10 min, about 8 to about 35 g/10 min, or about 8 to about 30 g/10 min).

The heterophasic thermoplastic polymer composition preferably has a soluble fraction of about 5 wt.% or more. More preferably, the heterophasic thermoplastic polymer composition has a soluble fraction of about 10 wt.% or more, about 11 wt.% or more, about 12 wt.% or more, about 13 wt.% or more, about 14 wt.% or more, about 15 wt.% or more, about 16 wt.% or more, about 17 wt.% or more, or about 18 wt.% or more. The heterophasic thermoplastic polymer composition preferably has a soluble fraction of about 50 wt.% or less, about 40 wt.% or less, about 35 wt.% or less, about 30 wt.% or less, or about 35 wt.% or less. Thus, in a series of preferred embodiments, the heterophasic thermoplastic polymer composition has a soluble fraction of about 5 to about 50 wt.% (e.g., about 5 to about 40 wt.%, about 5 to about 35 wt.%, about 5 to about 30 wt.%, or about 5 to about 25 wt.%), about 10 to about 50 wt.% (e.g., about 10 to about 40 wt.%, about 10 to about 35 wt.%, about 10 to about 30 wt.%, or about 10 to about 25 wt.%), about 12 to about 50 wt.% (e.g., about 12 to about 40 wt.%, about 12 to about 35 wt.%, about 12 to about 30 wt.%, or about 12 to about 25 wt.%), about 15 to about 50 wt.% (e.g., about 15 to about 40 wt.%, about 15 to about 35 wt.%, about 15 to about 30 wt.%, or about 15 to about 25 wt.%), about 16 to about 50 wt.% (e.g., about 16 to about 40 wt.%, about 16 to about 35 wt.%, about 16 to about 30 wt.%, or about 16 to about 25 wt.%), about 17 to about 50 wt.% (e.g., about 17 to about 40 wt.%, about 17 to about 35 wt.%, about 17 to about 30 wt.%, or about 17 to about 25 wt.%), or about 18 to about 50 wt.% (e.g., about 18 to about 40 wt.%, about 18 to about 35 wt.%, about 18 to about 30 wt.%, or about 18 to about 25 wt.%).

The ethylene content of the soluble fraction ($C2_{SF}$) of the heterophasic thermoplastic polymer composition preferably is about 8 wt.% or more. More preferably, the ethylene content of the soluble fraction is about 10 wt.% or more, about 15 wt.% or more, about 20 wt.% or more, about 25 wt.% or more, or about 30 wt.% or more. The ethylene content of the soluble fraction ($C2_{SF}$) of the heterophasic thermoplastic polymer composition preferably is about 90 wt.% or less. More preferably, the ethylene content of the soluble fraction is about 85 wt.% or less, about 80 wt.% or less, about 75 wt.% or less, about 70 wt.% or less, about 65 wt.% or less, about 60 wt.% or less, about 55 wt.% or less, or about 50 wt.% or less. Thus, in a series of preferred embodiments, the ethylene content of the soluble fraction ($C2_{SF}$) of the heterophasic thermoplastic polymer composition is about 8 to about 90 wt.% (e.g., about 8 to about 85 wt.%, about 8 to about 80 wt.%, about 8 to about 75 wt.%, about 8 to about 70 wt.%, about 8 to about 65 wt.%, about 8 to about 60 wt.%, about 8 to about 55 wt.%, or about 8 to about 50 wt.%), about 10 to about 90 wt.% (e.g., about 10 to about 85 wt.%, about 10 to about 80 wt.%, about 10 to about 75 wt.%, about 10 to about 70 wt.%, about 10 to about 65 wt.%, about 10 to about 60 wt.%, about 10 to about 55 wt.%, or about 10 to about 50 wt.%), about 15 to about 90 wt.% (e.g., about 15 to about 85 wt.%, about 15 to about 80 wt.%, about 15 to about 75 wt.%, about 15 to about 70 wt.%, about 15 to about 65 wt.%, about 15 to about 60 wt.%, about 15 to about 55 wt.%, or about 15 to about 50 wt.%), about 20 to about 90 wt.% (e.g., about 20 to about 85 wt.%, about 20 to about 80 wt.%, about 20 to about 75 wt.%, about 20 to about 70 wt.%, about 20 to about 65 wt.%, about 20 to about 60 wt.%, about 20 to about 55 wt.%, or about 20 to about 50 wt.%), about 25 to about 90 wt.% (e.g., about 25 to about 85 wt.%, about 25 to about 80 wt.%, about 25 to about 75 wt.%, about 25 to about 70 wt.%, about 25 to about 65 wt.%, about 25 to about 60 wt.%, about 25 to about 55 wt.%, or about 25 to about 50 wt.%), or about 30 to about 90 wt.% (e.g., about 30 to about 85 wt.%, about 30 to about 80 wt.%, about 30 to about 75 wt.%, about 30 to about 70 wt.%, about 30 to about 65 wt.%, about 30 to about 60 wt.%, about 30 to about 55 wt.%, or about 30 to about 50 wt.%).

Other characteristics of the bulk (as measured prior to treatment with the compatibilizing agent) may also influence the physical property improvements (e.g., increase in impact strength) realized through the incorporation of the compatibilizing agent as described herein. In particular, with respect to the bulk characteristics of the heterophasic thermoplastic polymer composition, the ethylene preferably comprises about 6 wt.% or more, about 7 wt.% or more, about 8 wt.% or more, or about 9 wt.% or more of the total weight of the heterophasic thermoplastic polymer composition. Further, about 5 mol.% or more, about 7 mol.% or more, about 8 mol.% or more, or about 9 mol.% or more of the ethylene present in the heterophasic thermoplastic polymer composition preferably is present in ethylene triads (i.e., a group of three ethylene monomer units bonded in sequence). Lastly, the number-average sequence length of ethylene runs (ethylene monomer units bonded in sequence) in the heterophasic thermoplastic polymer composition preferably is about 3 or more, about 3.25 or more, about 3.5 or more, about 3.75 or more, or about 4 or more. The mol.% of ethylene in ethylene triads and the number-average sequence length of ethylene runs can both be measured using $^{13}$C nuclear magnetic resonance (NMR) techniques known in the art. The heterophasic thermoplastic polymer composition can exhibit any one of the characteristics described in this paragraph. Preferably, the heterophasic thermoplastic polymer composition exhibits two or more of the characteristics described in this paragraph. Most preferably, the heterophasic thermoplastic polymer composition exhibits all of the characteristics described in this paragraph.

Certain characteristics of the ethylene phase of the heterophasic thermoplastic polymer composition (as measured prior to treatment with the compatibilizing agent) may also influence the physical property improvements (e.g., increase in impact strength) realized through the incorporation of the compatibilizing agent. The characteristics of the ethylene phase of the composition can be measured using any suitable technique, such as temperature rising elution fractionation (TREF) and $^{13}$C NMR analysis of the fractions obtained. In a preferred embodiment, about 30 mol.% or more, about 40 mol.% or more, or about 50 mol.% or more of the ethylene present in a 60 °C TREF fraction of the heterophasic thermoplastic polymer composition is present in ethylene triads. In another preferred embodiment, about 30 mol.% or more, about 40 mol.% or more, or about 50 mol.% or more of the ethylene present in an 80 °C TREF fraction of the heterophasic thermoplastic polymer composition is present in ethylene triads. In another preferred embodiment, about 5 mol.% or more, about 10 mol.% or more, about 15 mol.% or more, or about 20 mol.% or more of the ethylene present in a 100 °C TREF fraction of the heterophasic thermoplastic polymer composition is present in ethylene triads. The number-average sequence length of ethylene runs present in a 60 °C TREF fraction of the heterophasic thermoplastic polymer composition preferably is about 3 or more, about 4 or more, about 5 or more, or about 6 or more. The number-average sequence length of ethylene runs present in an 80 °C TREF fraction of the heterophasic thermoplastic polymer composition preferably is about 7 or more, about 8 or more, about 9 or more, or about 10 or more. The number-average sequence length of ethylene runs present in a 100 °C TREF fraction of the heterophasic thermoplastic polymer composition preferably is about 10 or more, about 12 or more, about 15 or more, or about 16 or more. The heterophasic thermoplastic polymer composition can exhibit any one of the TREF fraction characteristics described above or any suitable combination of the TREF fraction characteristics described above. In a preferred embodiment, the heterophasic thermoplastic polymer composition exhibits all of the TREF fraction characteristics described above (i.e., the ethylene triad and number-average sequence length characteristics for the 60 °C, 80 °C, and 100 °C TREF fractions described above).

Heterophasic thermoplastic polymer compositions exhibiting the characteristics described in the preceding paragraphs have been observed to respond more favorably to the addition of the compatibilizing agent than heterophasic thermoplastic polymer compositions that do not exhibit these characteristics. In particular, heterophasic thermoplastic polymer compositions exhibiting these characteristics show significant improvements in impact strength and exhibit partial break or non-break behavior when processed according to the methods of the invention, whereas heterophasic thermoplastic polymer compositions that do not exhibit these characteristics do not show these marked improvements when processed under the same conditions. This differential response and performance have been observed even when the different polymer compositions have approximately the same total ethylene content (i.e., the percent ethylene in each polymer composition is approximately the same). This result is surprising and was not anticipated.

The compatibilizing agent utilized in the method preferably comprises an ester compound formally derived from a polyol comprising three or more hydroxy groups and an aliphatic carboxylic acid comprising one or more carbon-carbon double bonds. As used herein, the term "formally derived" is used in the same sense as in the definition of "esters" in IUPAC. Compendium of Chemical Terminology, 2nd ed. (the "Gold Book"), compiled by A. D. McNaught and A. Wilkinson. Blackwell Scientific Publications, Oxford (1997). Thus, the ester compound need not be made by direct reaction of the polyol with the aliphatic carboxylic acid. Rather, the ester compound can be made by reacting the polyol or a derivative thereof (e.g., an alkyl halide derivative of the polyol or a methanesulfonyl, *p*-toluensulfonyl, or trifluoromethylsulfonyl ester of the polyol) with the aliphatic carboxylic acid or a derivative thereof (e.g., an acid salt, an acid halide derivative of the aliphatic carboxylic acid, or an active ester derivative such as esters with nitrophenol, N-hydroxysuccinimide, or hydroxybenzotriazole). The ester compound preferably is formally derived by linking each of the hydroxy groups of the polyol with an aliphatic carboxylic acid. The polyol from which the ester compound is formally derived can be any suitable polyol comprising three or more hydroxy groups, such as glycerol, 2-(hydroxymethyl)-2-ethylpropane-1,3-diol, erythritol, threitol, arabitol, xylitol, ribitol, mannitol, sorbitol, galactitol, fucitol, iditol, inositol, volemitol, pentaerythritol, and mixtures thereof. In a preferred embodiment, the polyol is 2-(hydroxymethyl)-2-ethylpropane-1,3-diol.

The aliphatic carboxylic acid from which the ester compound is formally derived can be any suitable aliphatic carboxylic acid comprising one or more carbon-carbon double bonds, such as acrylic acid. Preferably, the aliphatic carboxylic acid is selected from the group consisting of $C_4$ or greater aliphatic carboxylic acids. More preferably, the aliphatic carboxylic acid is selected from the group consisting of $C_4$-$C_{18}$ aliphatic carboxylic acids (e.g., $C_4$-$C_{16}$ aliphatic carboxylic acids). Even more preferably, the aliphatic carboxylic acid is selected from the group consisting of $C_4$-$C_{10}$ aliphatic carboxylic acids. In a preferred embodiment, the aliphatic carboxylic acid comprises two or more carbon-carbon double bonds. In such an embodiment, at least two of the carbon-carbon double bonds in the aliphatic carboxylic acid preferably are conjugated. In a preferred embodiment, the aliphatic carboxylic acid is 2,4-hexadienoic acid. Thus, in a preferred embodiment, the ester compound is 2,2-bis[(1,3-pentadienylcarbonyloxy)methyl]butyl 2,4-hexadienoate, which can be formally derived from one equivalent of 2-(hydroxymethyl)-2-ethylpropane-1,3-diol with three equivalents of 2,4-hexadienoic acid.

Any suitable peroxide compound can be used in the method described above. Suitable peroxide compounds include, but are not limited to: 2,5-dimethyl-2,5-di(*tert*-butylperoxy)hexane, 2,5-dimethyl-2,5-di(*tert*-butyl peroxy)hexyne-3,3,6,6,9,9-pentamethyl-3-(ethyl acetate)-1,2,4,5-tetraoxy cyclononane, tert-butyl hydroperoxide, hydrogen peroxide, dicumyl peroxide, *tert*-butyl peroxy isopropyl carbonate, di-*tert*-butyl peroxide, p-chlorobenzoyl peroxide, dibenzoyl diperoxide, *tert*-butyl cumyl peroxide; *tert*-butyl hydroxyethyl peroxide, di-*tert*-amyl peroxide and 2,5-dimethylhexene-2,5-diperisononanoate, acetylcyclohexanesulphonyl peroxide, diisopropyl peroxydicarbonate, *tert*-amyl perneodecanoate, *tert*-butyl-perneodecanoate, *tert*-butylperpivalate, *tert*-amylperpivalate, bis(2,4-dichlorobenzoyl)peroxide, diisononanoyl peroxide, didecanoyl peroxide, dioctanoyl peroxide, dilauroyl peroxide, bis(2-methylbenzoyl)peroxide, disuccinoyl peroxide, diacetyl peroxide, dibenzoyl peroxide, *tert*-butyl per-2-ethylhexanoate, bis(4-chlorobenzoyl)peroxide, *tert*-butyl perisobutyrate, *tert*-butyl permaleate, 1,1-bis(*tert*-butylperoxy)-3,5,5-trimethylcyclo-hexane, 1,1-bis(*tert*-butylperoxy)cyclohexane, *tert*-butyl peroxyisopropyl carbonate, *tert*-butyl perisononaoate, 2,5-dimethylhexane 2,5-dibenzoate, *tert*-butyl peracetate, *tert*-amyl perbenzoate, *tert*-butyl perbenzoate, 2,2-bis(*tert*-butylperoxy)butane, 2,2-bis(*tert*-butylperoxy)propane, dicumyl peroxide, 2,5-dimethylhexane 2,5-di-*tert*-butylperoxid, 3-*tert*-butylperoxy-3-phenyl phthalide, di-tert-amyl peroxide, $\alpha,\alpha'$-bis(*tert*-butylperoxyisopropyl)benzene, 3,5-bis(*tert*-butylperoxy)-3,5-dimethyl-1,2-dioxolane, di-*tert*-butyl peroxide, 2,5-dimethylhexyne 2,5-di-tert-butyl peroxide, 3,3,6,6,9,9-hexamethyl-1,2,4,5-tetraoxacyclononane, p-menthane hydroperoxide, pinane hydroperoxide, diisopropylbenzene mono-$\alpha$-hydroperoxide, cumene hydroperoxide or *tert*-butyl hydroperoxide. In a preferred embodiment, the peroxide compound is 2,5-dimethyl-2,5-di(*tert*-butylperoxy)hexane.

In the method, the thermoplastic polymer, the compatibilizing agent, and the peroxide compound are fed to a melt mixing apparatus. The melt mixing apparatus can be any suitable apparatus that can heat the thermoplastic polymer to a temperature at which it is molten and mix the thermoplastic polymer, the compatibilizing agent, and the peroxide compound while the polymer is molten. The thermoplastic polymer, the compatibilizing agent, and the peroxide compound can be mixed prior to heating, or the thermoplastic polymer can be heated to the desired temperature followed by addition of the compatibilizing agent and peroxide compound. Alternatively, the thermoplastic polymer and the compatibilizing agent can be combined and then heated followed by addition of the peroxide compound (e.g., once the mixture is heated to a temperature above the melting point of the polymer). Suitable melt mixing apparatus include, but are not limited to, extruders, the reciprocating screw of injection molding machines, and high shear mixers. In a preferred embodiment of the first method, the melt mixing apparatus is an extruder. Thus, in an embodiment in which the melt mixing apparatus is an extruder, the method comprises the steps of feeding the thermoplastic polymer, the compatibilizing agent, and the peroxide compound to an extruder and passing the thermoplastic polymer, the compatibilizing agent, and the peroxide compound through the extruder at a temperature that exceeds the melting point of the thermoplastic polymer thereby forming a polymer composition. When an extruder is used, the thermoplastic polymer, the compatibilizing agent, and the peroxide compound can be simultaneously fed to the extruder's main inlet or hopper. Alternatively, the thermoplastic polymer can be fed to the extruder's main inlet or hopper, and the compatibilizing agent and peroxide compound can be introduced into the extruder through one or more side feeders. In another alternative, the thermoplastic polymer and the compatibilizing agent can be fed to the extruder's main inlet or hopper, and the peroxide compound can be introduced into the extruder through a side feed.

The compatibilizing agent and the peroxide compound can be fed to the melt mixing apparatus in any suitable amounts. Preferably, the compatibilizing agent is fed to the melt mixing apparatus in an amount to provide an initial concentration of about 200 to about 15,000 ppm of the ester compound based on the combined weight of the thermoplastic polymer, the compatibilizing agent, and the peroxide compound. More preferably, the compatibilizing agent is fed to the melt mixing apparatus in an amount to provide an initial concentration of about 200 to about 10,000 ppm (e.g., about 200 to about 8,000 ppm, about 200 to about 6,000 ppm, or about 200 to about 5,000 ppm) of the ester compound based on the combined weight of the thermoplastic polymer, the compatibilizing agent, and the peroxide compound.

Preferably, the peroxide compound is fed to the melt mixing apparatus in an amount to provide an initial concentration of about 10 to about 315 ppm of active oxygen based on the combined weight of the thermoplastic polymer, the compatibilizing agent, and the peroxide compound. More preferably, the peroxide compound is fed to the melt mixing apparatus in an amount to provide an initial concentration of about 50 to about 315 ppm of active oxygen based on the combined weight of the thermoplastic polymer, the compatibilizing agent, and the peroxide compound. Still more preferably, the peroxide compound is fed to the melt mixing apparatus in an amount to provide an initial concentration of about 50 to about 265 ppm of active oxygen based on the combined weight of the thermoplastic polymer, the compatibilizing agent, and the peroxide compound. Most preferably, the peroxide compound is fed to the melt mixing apparatus in an amount to provide an initial concentration of about 50 to about 215 ppm of active oxygen based on the combined weight of the thermoplastic polymer, the compatibilizing agent, and the peroxide compound. The amount of active oxygen provided by a given amount of a peroxide compound can be calculated using the following equation

$$\text{Active oxygen (ppm)} = \frac{16 \times n \times P \times C}{M}$$

In the equation, n is the number of peroxide groups in the peroxide compound, P is the purity of the peroxide compound, C is the concentration (in ppm) of the peroxide compound added to the system, and M is the molar mass of the peroxide compound. Thus, when 95% pure 2,5-dimethyl-2,5-di(*tert*-butylperoxy)hexane is added at an initial concentration of 500 ppm, the peroxide compound provides an initial concentration of 52.5 ppm of active oxygen.

As noted above, the thermoplastic polymer, the compatibilizing agent, and the peroxide compound are processed in the melt mixing apparatus at a temperature that exceeds the melting point of the thermoplastic polymer. In those embodiments in which the thermoplastic polymer is a heterophasic thermoplastic polymer, these components are heated to a temperature that exceeds the melting point of the continuous phase of the heterophasic thermoplastic polymer. By way of example, the components preferably are melt mixed at a temperature of about 160 °C to about 300 °C. In those embodiments in which the thermoplastic polymer is a propylene impact copolymer, the components preferably are melt mixed at a temperature of about 180 °C to about 290 °C.

In a second embodiment, the invention provides a method for making a polymer composition, the method comprising the steps of (a) providing a thermoplastic polymer; (b) providing a compatibilizing agent; (c) providing a peroxide compound; (d) combining the thermoplastic polymer, the compatibilizing agent, and the peroxide compound to produce an intermediate composition; (e) heating the intermediate composition to a temperature that exceeds the melting point of the thermoplastic polymer; (f) mixing the intermediate composition to produce a polymer composition; and (g) cooling the polymer composition to a temperature at which it solidifies.

The thermoplastic polymer, compatibilizing agent, and peroxide compound used in this second method embodiment can be any of the thermoplastic polymers, compatibilizing agents, and peroxide compounds discussed above in connection with the first method embodiment of the invention, including those preferred thermoplastic polymers, compatibilizing agents, and peroxide compounds identified in connection with the first method embodiment.

In this second method embodiment, any suitable amount of the compatibilizing agent can be used. Preferably, the compatibilizing agent is combined with the thermoplastic polymer and the peroxide compound in an amount to provide about 200 to about 15,000 ppm of the ester compound in the intermediate composition. More preferably, the compatibilizing agent is combined with the thermoplastic polymer and the peroxide compound in an amount to provide about 200 to about 10,000 ppm (e.g., about 200 to about 8,000 ppm, about 200 to about 6,000 ppm, or about 200 to about 5,000 ppm) of the ester compound in the intermediate composition.

Any suitable amount of the peroxide compound can be used in this second method embodiment. Preferably, the peroxide compound is combined with the thermoplastic polymer and the compatibilizing agent in an amount to provide about 10 to about 315 ppm of active oxygen in the intermediate composition. More preferably, the peroxide compound is combined with the thermoplastic polymer and the compatibilizing agent in an amount to provide about 50 to about 315 ppm of active oxygen in the intermediate composition. Still more preferably, the peroxide compound is combined with the thermoplastic polymer and the compatibilizing agent in an amount to provide about 50 to about 265 ppm of active oxygen in the intermediate composition. Most preferably, the peroxide compound is combined with the thermoplastic polymer and the compatibilizing agent in an amount to provide about 50 to about 215 ppm of active oxygen in the intermediate composition.

The second method embodiment differs from the first in that the thermoplastic polymer, compatibilizing agent, and peroxide compound are mixed prior to being heated. This method can be employed in those processes in which the components are dry blended prior to melt processing, such as certain compression molding processes. As with the first method embodiment, the components are heated to a temperature that exceeds the melting point of the thermoplastic polymer. In those embodiments in which the thermoplastic polymer is a heterophasic thermoplastic polymer, these components are heated to a temperature that exceeds the melting point of the continuous phase of the heterophasic thermoplastic polymer. By way of example, the components preferably are heated to a temperature of about 160 °C to about 300 °C. In those embodiments in which the thermoplastic polymer is a propylene impact copolymer, the components preferably are heated to a temperature of about 180 °C to about 290 °C.

While not wishing to be bound to any particular theory, the methods described above are believed to improve the physical properties of the thermoplastic polymer by linking polymer chains within the polymer matrix. In particular, when the thermoplastic polymer is a heterophasic thermoplastic polymer, the method is believed to create bonds between propylene polymers in the continuous phase and ethylene polymers in the discontinuous phase. These bonds are believed to be created when the peroxide compound breaks polymer chains in the polymer, which polymer chain scission produces an increase in the MFR of the polymer. Further, these broken polymer chains are believed to possess carbon-centered free radicals that can react with one of the carbon-carbon double bonds in the ester compound to produce a new carbon-carbon bond between the polymer chain and the ester compound. As this sequence of polymer chain scission and free radical addition to the ester compound progresses, it is believed that at least some of the ester compound in the polymer reacts to provide a bridge or link between the different polymers (e.g., the propylene polymer and the ethylene polymer) in the heterophasic polymer.

The methods described above can be used to produce polymer compositions that are rendered into a final form using any conventional polymer processing technique, such as injection molding, thin-wall injection molding, single-screw compounding, twin-screw compounding, Banbury mixing, co-kneader mixing, two-roll milling, sheet extrusion, fiber extrusion, film extrusion, pipe extrusion, profile extrusion, extrusion coating, extrusion blow molding, injection blow molding, injection stretch blow molding, compression molding, extrusion compression molding, compression blow forming, compression stretch blow forming, thermoforming, and rotomolding. Thermoplastic polymer articles made using the polymer composition formed by these methods can be comprised of multiple layers, with one or any suitable number of the multiple layers containing a polymer composition formed by these methods. By way of example, typical end-use products include containers, packaging, automotive parts, bottles, expanded or foamed articles, appliance parts, closures, cups, furniture, housewares, battery cases, crates, pallets, films, sheet, fibers, pipe, and rotationally molded parts.

In the method embodiments described above, the compatibilizing agent can be provided in the form of a masterbatch composition, such as a masterbatch composition comprising (a) a thermoplastic binder, (b) an ester compound as described above, and (c) optionally, a peroxide compound. In the practice of the methods, the masterbatch composition can be combined with a thermoplastic polymer (e.g., a heterophasic polypropylene impact copolymer) in an amount that provides the desired initial concentrations of both the peroxide compound and, if present, the ester compound.

The thermoplastic binder in the masterbatch composition can be any thermoplastic material that is capable of binding together the components of the masterbatch composition. The thermoplastic binder preferably has a melting point of about 140 °C or less, about 130 °C or less, about 120 °C or less, more preferably about 110 °C or less, about 100 °C or less, about 90 °C or less, about 80 °C or less, about 70 °C or less, about 60 °C or less, or about 50 °C or less. Suitable thermoplastic binders include, but are not limited to polypropylenes, polypropylene waxes, low-density polyethylenes, polyethylene waxes, propylene/ethylene copolymers (such as those sold under the name "Vistamaxx" by ExxonMobil Chemical), ethylene vinyl acetate copolymers, and mixtures thereof.

The peroxide compound and ester compound in the masterbatch composition can be any of the peroxide compounds and ester compounds discussed above in connection with the first method embodiment of the invention, including those preferred peroxide compounds and ester compounds identified in connection with the first method embodiment. Thus, in a preferred embodiment, the ester compound is 2,2-bis[(1,3-pentadienylcarbonyloxy)methyl]butyl 2,4-hexadienoate. In another preferred embodiment, the peroxide compound is 2,5-dimethyl-2,5-di(tert-butylperoxy) hexane. Lastly, in a particularly preferred embodiment of the masterbatch composition, the ester compound is 2,2-bis[(1,3-pentadienylcarbonyloxy)methyl]butyl 2,4-hexadienoate, and the peroxide compound is 2,5-dimethyl-2,5-di(tert-butylperoxy)hexane.

The ester compound can be present in the masterbatch composition in any suitable amount. Preferably, the ester compound is present in the masterbatch composition in an amount of about 1 wt.% or more based on the total weight of the masterbatch composition. More preferably, the ester compound is present in the masterbatch composition in an amount of about 2 wt.% or more, about 3 wt.% or more, about 4 wt.% or more, about 5 wt.% or more, about 6 wt.% or more, about 7 wt.% or more, about 8 wt.% or more, about 9 wt.% or more, or about 10 wt.% or more, based on the total weight of the masterbatch composition. Preferably, the ester compound is present in the masterbatch composition in an amount of about 40 wt.% or less based on the total weight of the masterbatch composition. Thus, in a series of preferred embodiments, the ester compound is present in the masterbatch composition in an amount of about 1 wt.% to about 40 wt.%, about 2 wt.% to about 40 wt.%, about 3 wt.% to about 40 wt.%, about 4 wt.% to about 40 wt.%, about 5 wt.% to about 40 wt.%, about 6 wt.% to about 40 wt.%, about 7 wt.% to about 40 wt.%, about 8 wt.% to about 40 wt.%, about 9 wt.% to about 40 wt.%, or about 10 wt.% to about 40 wt.%, based on the total weight of the masterbatch composition.

If present, the peroxide compound can be present in the masterbatch composition in any suitable amount. Preferably, the peroxide compound is present in the masterbatch composition in an amount of about 1 wt.% or more based on the total weight of the masterbatch composition. More preferably, the peroxide compound is present in the masterbatch composition in an amount of about 2 wt.% or more, about 3 wt.% or more, about 4 wt.% or more, about 5 wt.% or more, about 6 wt.% or more, about 7 wt.% or more, about 8 wt.% or more, about 9 wt.% or more, or about 10 wt.% or more, based on the total weight of the masterbatch composition. Preferably, the peroxide compound is present in the masterbatch composition in an amount of about 40 wt.% or less based on the total weight of the masterbatch composition. Thus, in a series of preferred embodiments, the peroxide compound is present in the masterbatch composition in an amount of about 1 wt.% to about 40 wt.%, about 2 wt.% to about 40 wt.%, about 3 wt.% to about 40 wt.%, about 4 wt.% to about 40 wt.%, about 5 wt.% to about 40 wt.%, about 6 wt.% to about 40 wt.%, about 7 wt.% to about 40 wt.%, about 8 wt.% to about 40 wt.%, about 9 wt.% to about 40 wt.%, or about 10 wt.% to about 40 wt.%, based on the total weight of the masterbatch composition.

The masterbatch composition can contain other polymer additives in addition to the ester compound and the optional peroxide compound. Suitable additional polymer additives include, but are not limited to, antioxidants (e.g., phenolic antioxidants, phosphite antioxidants, and combinations thereof), antiblocking agents (e.g., amorphous silica and diatomaceous earth), pigments (e.g., organic pigments and inorganic pigments) and other colorants (e.g., dyes and polymeric colorants), fillers and reinforcing agents (e.g., glass, glass fibers, talc, calcium carbonate, and magnesium oxysulfate whiskers), nucleating agents, clarifying agents, acid scavengers (e.g., metal salts of fatty acids, such as the metal salts of stearic acid, and dihydrotalcites), polymer processing additives (e.g., fluoropolymer polymer processing additives), polymer cross-linking agents, slip agents (e.g., fatty acid amide compounds derived from the reaction between a fatty acid and ammonia or an amine-containing compound), fatty acid ester compounds (e.g., fatty acid ester compounds derived from the reaction between a fatty acid and a hydroxyl-containing compound, such as glycerol, diglycerol, and combinations thereof), and combinations of the foregoing.

As noted above, the masterbatch composition can contain nucleating agents and/or clarifying agents in addition to the other components described above. Suitable nucleating agents include, but are not limited to, benzoate salts (e.g., sodium benzoate and aluminum 4-*tert*-butylbenzoate), 2,2'-methylene-bis-(4,6-di-*tert*-butylphenyl) phosphate salts (e.g., sodium 2,2'-methylene-bis-(4,6-di-*tert*-butylphenyl) phosphate or aluminum 2,2'-methylene-bis-(4,6-di-*tert*-butylphenyl) phosphate), bicyclo[2.2.1]heptane-2,3-dicarboxylate salts (e.g., disodium bicyclo[2.2.1]heptane-2,3-dicarboxylate or calcium bicyclo[2.2.1]heptane-2,3-dicarboxylate), cyclohexane-1,2-dicarboxylate salts (e.g., calcium cyclohexane-1,2-dicarboxylate, monobasic aluminum cyclohexane-1,2-dicarboxylate, dilithium cyclohexane-1,2-dicarboxylate, or strontium cyclohexane-1,2-dicarboxylate), and combinations thereof. For the bicyclo[2.2.1]heptane-2,3-dicarboxylate salts and the cyclohexane-1,2-dicarboxylate salts, the carboxylate moieties can be arranged in either the *cis*- or *trans*-configuration, with the *cis*- configuration being preferred. Suitable clarifying agents include, but are not limited to, trisamides and acetal compounds that are the condensation product of a polyhydric alcohol and an aromatic aldehyde. Suitable trisamide clarifying agents include, but are not limited to, amide derivatives of benzene-1,3,5-tricarboxylic acid, amide derivatives of 1,3,5-benzenetriamine, derivatives of *N*-(3,5-bis-formylamino-phenyl)-formamide (e.g., *N*-[3,5-bis-(2,2-dimethyl-propionylamino)-phenyl]-2,2-dimethyl-propionamide), derivatives of 2-carbamoyl-malonamide (e.g., *N,N'*-bis-(2-methyl-cyclohexyl)-2-(2-methyl-cyclohexylcarbamoyl)-malonamide), and combinations thereof. As noted above, the clarifying agent can be an acetal compound that is the condensation product of a polyhydric alcohol and an aromatic aldehyde. Suitable polyhydric alcohols include acyclic polyols such as xylitol and sorbitol, as well as acyclic deoxy polyols (e.g., 1,2,3-trideoxynonitol or 1,2,3-trideoxynon-1-enitol). Suitable aromatic aldehydes typically contain a single aldehyde group with the remaining positions on the aromatic ring being either unsubstituted or substituted. Accordingly, suitable aromatic aldehydes include benzaldehyde and substituted benzaldehydes (e.g., 3,4-dimethylbenzaldehyde, 3,4-dichlorobenzaldehyde, or 4-propylbenzaldehyde). The acetal compound produced by the aforementioned reaction can be a mono-acetal, di-acetal, or tri-acetal compound (i.e., a compound containing one, two, or three acetal groups, respectively), with the di-acetal compounds being preferred. Suitable acetal-based clarifying agents include, but are not limited to, the clarifying agents disclosed in U.S. Patent Nos. 5,049,605; 7,157,510; and 7,262,236. Some particularly preferred clarifying agents include 1,3:2,4-bis-*O*-(phenylmethylene)-D-glucitol, 1,3:2,4-bis-*O*-[(4-methylphenyl)methylene]-D-glucitol, 1,3:2,4-bis-*O*-[(3,4-dimethylphenyl)methylene]-D-glucitol, 1,3:2,4-bis-*O*-[(3,4-dichlorophenyl)methylene]-D-glucitol, 1,2,3-trideoxy-4,6:5,7-bis-O-[(4-propylphenyl)methylene]nonitol, and mixtures thereof.

If present in the masterbatch composition, the nucleating agents and/or clarifying agents can be present in any suitable amount. Preferably, the nucleating agents and/or clarifying agents are present in an amount of about 1 wt.% or more based on the total weight of the masterbatch composition. More preferably, the nucleating agents and/or clarifying agents are present in the masterbatch composition in an amount of about 2 wt.% or more, about 3 wt.% or more, about 4 wt.% or more, about 5 wt.% or more, about 6 wt.% or more, about 7 wt.% or more, about 8 wt.% or more, about 9 wt.% or more, or about 10 wt.% or more, based on the total weight of the masterbatch composition. Preferably, the nucleating agents and/or clarifying agents are present in the masterbatch composition in an amount of about 40 wt.% or less based on the total weight of the masterbatch composition. Thus, in a series of preferred embodiments, the nucleating agents and/or clarifying agents are present in the masterbatch composition in an amount of about 1 wt.% to about 40 wt.%, about 2 wt.% to about 40 wt.%, about 3 wt.% to about 40 wt.%, about 4 wt.% to about 40 wt.%, about 5 wt.% to about 40 wt.%, about 6 wt.% to about 40 wt.%, about 7 wt.% to about 40 wt.%, about 8 wt.% to about 40 wt.%, about 9 wt.% to about 40 wt.%, or about 10 wt.% to about 40 wt.%, based on the total weight of the masterbatch composition. When the masterbatch composition comprises two or more nucleating agents and/or clarifying agents, the combined amount of both preferably falls within one of the ranges recited above.

In the method embodiments described above, the compatibilizing agent can be provided in the form of a concentrate composition comprising (a) an antioxidant and (b) an ester compound as described above. The concentrate composition preferably is solid (or semisolid) at ambient temperatures (e.g., temperatures of approximately 25 °C) to facilitate handling. The concentrate composition can be used in the methods described above as a means for introducing the ester compound.

The concentrate composition can contain any suitable antioxidant or mixture of antioxidants. Preferably, the concentrate composition comprises an antioxidant selected from the group consisting of hindered phenol compounds, hindered amine compounds, phosphite compounds, phosphonite compounds, thio compounds, and mixtures thereof. Suitable antioxidant compounds include, but are not limited to, pentaerythritol tetrakis(3-(3,5-di-tert-butyl-4-hydroxyphenyl)propionate) (CAS No. 6683-19-8), octadecyl 3-(3,5-di-tert-butyl-4-hydroxyphenyl)propionate (CAS No. 2082-79-3), tris(2,4-di-tert-butylphenyl) phosphite (CAS No. 31570-04-4), 3,9-bis[2,4-bis(1,1-dimethylethyl)phenoxy]- 2,4,8,10-tetraoxa-3,9-diphosphaspiro[5.5]undecane (CAS No. 26741-53-7), bis(1-octyloxy-2,2,6,6-tetramethyl-4-piperidyl)sebacate (CAS No. 129757-67-1), bis(1,2,2,6,6-pentamethyl-4-piperidyl)sebacate (CAS No. 41556-26-7), methy-1,2,2,6,6-pentamethyl-4-piperidyl sebacate (CAS No. 82919-37-7), didodecyl-3,3'-thiodipropionate (CAS No. 123-28-4), 3,3'-thiodipropionic acid dioctadecylester (CAS No. 693-36-7), and tetrakis (2,4-di-t-butylphenyl) 4,4'-biphenylene diphosphonate (CAS No. 119345-01-6). In a preferred embodiment, the concentrate composition comprises a hindered phenol antioxidant, more preferably a 2,6-di-*tert*-butylphenol compound (i.e., a compound comprising at least one 2,6-di-*tert*-butylphenol moiety).

The antioxidant can be present in the concentrate composition in any suitable amount. Preferably, the antioxidant is present in the concentrate composition in an amount of about 5 wt.% or more based on the total weight of the concentrate composition. More preferably, the antioxidant is present in the concentrate composition in an amount of about 8 wt.% or more or about 10 wt.% or more based on the total weight of the concentrate composition. Preferably, the antioxidant is present in the concentrate composition in an amount of about 85 wt.% or less (e.g., about 80 wt.% or less, about 70 wt.% or less, about 60 wt.% or less, or about 50 wt.% or less) based on the total weight of the concentrate composition. Thus, in a series of preferred embodiments, the antioxidant can be present in the concentrate composition in an amount of about 5 wt.% to about 85 wt.% (e.g., about 5 wt.% to about 80 wt.%, about 5 wt.% to about 70 wt.%, about 5 wt.% to about 60 wt.%, or about 5 wt.% to about 50 wt.%), about 8 wt.% to about 85 wt.% (e.g., about 8 wt.% to about 80 wt.%, about 8 wt.% to about 70 wt.%, about 8 wt.% to about 60 wt.%, or about 8 wt.% to about 50 wt.%), or about 10 wt.% to about 85 wt.% (e.g., about 10 wt.% to about 80 wt.%, about 10 wt.% to about 70 wt.%, about 10 wt.% to about 60 wt.%, or about 10 wt.% to about 50 wt.%). When the concentrate composition comprises two or more antioxidants, the combined amount of both antioxidants preferably falls within one of the ranges recited above.

As noted above, the concentrate composition comprises an ester compound. The ester compound in the concentrate composition can be any of the ester compounds discussed above in connection with the first method embodiment of the invention, including those preferred ester compounds identified in connection with the first method embodiment. The concentrate composition can contain any suitable amount of the ester compound. Preferably, the ester compound is present in the concentrate composition in an amount of about 1 wt.% or more based on the total weight of the concentrate composition. More preferably, the ester compound is present in the concentrate composition in an amount of about 2 wt.% or more, about 3 wt.% or more, about 4 wt.% or more, about 5 wt.% or more, about 6 wt.% or more, about 7 wt.% or more, about 8 wt.% or more, about 9 wt.% or more, or about 10 wt.% or more, based on the total weight of the concentrate composition. Preferably, the ester compound is present in the concentrate composition in an amount of about 85 wt.% or less (e.g., about 80 wt.% or less, about 70 wt.% or less, about 60 wt.% or less, about 50 wt.% or less, or about 40 wt.% or less) based on the total weight of the concentrate composition. Thus, in a series of preferred embodiments, the ester compound is present in the concentrate composition in an amount of about 1 wt.% to about 85 wt.%, about 2 wt.% to about 85 wt.%, about 3 wt.% to about 85 wt.%, about 4 wt.% to about 85 wt.%, about 5 wt.% to about 85 wt.%, about 6 wt.% to about 85 wt.%, about 7 wt.% to about 85 wt.%, about 8 wt.% to about 85 wt.%, about 9 wt.% to about 85 wt.%, or about 10 wt.% to about 85 wt.%, based on the total weight of the concentrate composition.

As with the masterbatch composition, the concentrate composition can contain other polymer additives in addition to the antioxidant and ester compound. Suitable additional polymer additives include those discussed above in connection with the masterbatch composition of the invention, such as nucleating agents and clarifying agents. These polymer additives can be present in the concentrate composition in any suitable amounts. For example, if present in the concentrate composition, the nucleating agents and/or clarifying agents can be present in an amount of about 1 wt.% or more based on the total weight of the concentrate composition. More preferably, the nucleating agents and/or clarifying agents are present in the concentrate composition in an amount of about 2 wt.% or more, about 3 wt.% or more, about 4 wt.% or more, about 5 wt.% or more, about 6 wt.% or more, about 7 wt.% or more, about 8 wt.% or more, about 9 wt.% or more, or about 10 wt.% or more, based on the total weight of the concentrate composition. Preferably, the nucleating agents and/or clarifying agents are present in the concentrate composition in an amount of about 80 wt.% or less based on the total weight of the concentrate composition. Thus, in a series of preferred embodiments, the nucleating agents and/or clarifying agents are present in the concentrate composition in an amount of about 1 wt.% to about 80 wt.%, about 2 wt.% to about 80 wt.%, about 3 wt.% to about 80 wt.%, about 4 wt.% to about 80 wt.%, about 5 wt.% to about 80 wt.%, about 6 wt.% to about 80 wt.%, about 7 wt.% to about 80 wt.%, about 8 wt.% to about 80 wt.%, about 9 wt.% to about 80 wt.%, or about 10 wt.% to about 80 wt.%, based on the total weight of the concentrate composition. When the concentrate composition comprises two or more nucleating agents and/or clarifying agents, the combined amount of both preferably falls within one of the ranges recited above.

In a third embodiment, the invention provides a modified polymer composition, such as the modified polymer composition produced by the methods described herein. In particular, the invention provides a modified polymer composition comprising (a) a heterophasic thermoplastic polymer composition comprising a propylene continuous phase and an ethylene discontinuous phase and (b) a compatibilizing agent. The heterophasic thermoplastic polymer composition in the modified polymer composition can be any of the heterophasic thermoplastic polymer compositions described above in connection with the method embodiments of the invention. The compatibilizing agent present in the modified polymer composition comprises an ester compound formally derived from (i) a polyol comprising three or more hydroxy groups and (ii) an aliphatic carboxylic acid comprising one or more carbon-carbon double bonds. The compatibilizing agent present in the modified polymer composition can be any of the compatibilizing agents described above in connection with the method embodiments of the invention.

Heterophasic thermoplastic polymer compositions exhibiting good impact properties generally have a discontinuous phase with a small particle diameter (e.g., about 1 $\mu$m or smaller) and good adhesion to the continuous phase. However, it has also been shown that small particle diameter of the discontinuous phase alone is not sufficient to provide industry-desired levels of impact strength. While not wishing to be bound to any particular theory, the present inventors believe they have discovered that achieving desirable levels of impact strength requires small particle diameter coupled with a sufficient amount of such particles dispersed in the continuous phase. Since the amount or number of particles that can occupy a given space is related to the diameter of those particles, the present inventors have found that these two factors can be combined and expressed as a minimum concentration of particles per unit of volume as described below.

In the modified polymer composition, the ethylene discontinuous phase is present in the form of discrete particles dispersed in the propylene continuous phase. The discrete particles of the ethylene discontinuous phase preferably are present in the modified polymer composition in a concentration of 2.1 or more particles per cubic micron. In more preferred embodiments, the discrete particles of the ethylene discontinuous phase are present in the modified polymer composition in a concentration of 2.2 or more particles per cubic micron, 2.3 or more particles per cubic micron, or 2.4 or more particles per cubic micron. The discrete particles of the ethylene discontinuous phase preferably are present in the modified polymer composition in a concentration of 100 or less particles per cubic micron. Thus, in a series of preferred embodiments, the discrete particles of the ethylene discontinuous phase are present in the modified polymer composition in a concentration of 2.1 to 100 particles per cubic micron, 2.2 to 100 particles per cubic micron, 2.3 to 100 particles per cubic micron, or 2.4 to 100 particles per cubic micron.

The particle concentration of the ethylene discontinuous phase preferably is determined using the method described in this paragraph. Standard injection molded bars used for impact testing are cooled in liquid nitrogen and then fractured approximately 1 inch (2.5 cm) from the end of the bar. The rubber at the interface is removed by sonication in methylcyclohexane. The specimens are mounted on 45° wedges for 90° cross-section imaging and gold coated. Images are then generated using a scanning electron microscope (e.g., an ESEM FEI Quanta 400F) under conditions of high vacuum, low 5.0-10.0 keV, low 3.0-3.5 spot, ~12 WD (working distance) and imaged with an ETD secondary electron detector (i.e., an Everhart-Thornley detector). Images are collected near the center of the cross-section at a magnification of 5000X. Particles are then identified and sized using image analysis software. The area equivalent diameter of the particles is calculated according to ISO 13322-1 "Particle size analysis - Image analysis methods - Part 1: Static image analysis methods". The distribution of area-equivalent diameter is then averaged to produce the volume mean diameter [i.e., the D(4,3)] according to ASTM E799. The particle concentration is then calculated as the ratio of the soluble fraction (determined as described above) to particle volume, calculated using the equation for volume of a spherical particle with diameter D(4,3). The particle concentration has units of particles per cubic micron, which can also be denoted as $\mu$m$^{-3}$.

The compatibilizing agent can be present in the modified polymer composition in any suitable amount. Preferably, the compatibilizing agent is present in the modified polymer composition in an amount to provide about 50 to about 5,000 ppm of the ester compound in the modified polymer composition. More preferably, the compatibilizing agent is present in the modified polymer composition in an amount to provide about 50 to about 4,000 ppm (e.g., about 50 to about 3,000 ppm, about 50 to about 2,000 ppm, or about 50 to about 1,500 ppm) of the ester compound in the modified polymer composition.

The modified polymer composition can contain other polymer additives in addition to heterophasic thermoplastic polymer composition and the compatibilizing agent comprising the ester compound. Suitable additional polymer additives include, but are not limited to, those optional additives discussed above in connection with the masterbatch composition and the concentrate composition forms in which the compatibilizing agent can be provided for use in the disclosed methods.

The following examples further illustrate the subject matter described above but, of course, should not be construed as in any way limiting the scope thereof. The following methods, unless noted, were used to determine the properties described in the following examples.

Each of the compositions was compounded by blending the components in a closed container for approximately one minute. The compositions were then melt compounded on a twin-screw extruder using typical processing conditions for polypropylene injection molding grades. The extrudate (in the form of a strand) for each polypropylene copolymer composition was cooled in a water bath and subsequently pelletized.

The pelletized compositions were then used to form bars by injection molding the compositions under typical conditions for polypropylene injection molding grades to make ISO or ASTM size sample testing bars. The resulting bars have measurements adhering to the corresponding standard.

The melt flow rate (MFR) was determined on the pelletized compositions according to ASTM D1238 or ISO 1133 at 230 °C with a load of 2.16 kg for polypropylene.

The notched Izod impact strength for the bars was measured according to ISO 180/A method or ASTM D256 method. The notched Izod impact strength was measured at +23 °C on bars that had been conditioned at +23 °C.

The notched Charpy impact strength for the bars was measured according to ISO 179 method. The notched Charpy impact strength was measured at +23 °C on bars that had been conditioned at +23 °C.

Solution properties of the polymer (e.g., soluble fraction, ethylene content of the soluble fraction, intrinsic viscosities, etc.) were measured using a Crystex® 42 analyzer (Polymer Char, Valencia, Spain) and 1,2,4-trichlorobenzene stabilized with 300 ppm of pentaerythritol tetrakis(3-(3,5-di-tert-butyl-4-hydroxyphenyl)propionate). A 160 mg sample of the polymer was dissolved in 16 mL of solvent. The sample volume injected into the analyzer was 0.3 mL. The dissolution temperature was 160 °C, the crystallization temperature was 40 °C, and the analysis temperature was 165 °C. The dissolution time was 90 min, with stirring set to high. The crystallization time was 40 min. The term $\beta/\alpha$ is the ratio of the intrinsic viscosities of the soluble fraction and crystalline fractions, respectively. Soluble fraction (SF) and ethylene content of the soluble fraction ($C2_{SF}$) were also determined by the Crystex-42.

The particle size of the ethylene discontinuous phase was determined as follows. Standard injection molded bars used for impact testing were cooled in liquid nitrogen and then fractured approximately 1 inch from the end of the bar. The rubber at the interface was removed by sonication in methylcyclohexane. The specimens were mounted on 45° wedges for 90° cross-section imaging and gold coated. Images were generated using an ESEM FEI Quanta 400F scanning electron microscope under conditions of high vacuum, low 5.0-10.0 keV, low 3.0-3.5 spot, ~12 WD (working distance) and imaged with an ETD secondary electron detector (Everhart-Thornley detector). Images were collected near the center of the cross-section at a magnification of 5000X. Particles were identified and sized using image analysis software. The area equivalent diameter was calculated according to ISO 13322-1 "Particle size analysis - Image analysis methods - Part 1: Static image analysis methods". The distribution of area-equivalent diameter was averaged to produce the volume mean diameter [i.e., the D(4,3)] according to ASTM E799. The particle concentration was calculated as the ratio of soluble fraction (determined using the Crystex® 42 analyzer as described above) to particle volume and calculated using the equation for volume of a spherical particle with diameter D(4,3). The particle concentration was determined in units of particles per cubic micron, which is denoted subsequently as $\mu m^{-3}$.

EXAMPLE 1

This example demonstrates the effect of $C2_{SF}$ on the unmodified heterophasic polyolefin composition in the context of the method of the present invention.

A total of six polymer compositions (Samples 1A-1F) were produced from one of two polypropylene impact copolymers, Total 5720WZ or ExxonMobil PP7414. The impact copolymers were modified with peroxide alone (Samples 1B and 1E) or with peroxide and compatibilizing agent (Samples 1C and 1F). The peroxide was Varox DBPH available from Vanderbilt Chemicals, LLC. The compatibilizing agent was 2,2-bis[(1,3-pentadienylcarbonyloxy)methyl]butyl 2,4-hexadienoate (CAS No. 347377-00-8). The loadings of peroxide and compatibilizing agent are set forth in Table 1B below.

Table 1A tabulates the MFR, SF, and $C2_{SF}$ for two polymer polypropylene impact copolymers, Total 5720WZ and ExxonMobil PP7414. Substituting those values into the equations for inequalities 1, 2, and 3 above provides values of R1, R2, and R3. Table 1A reports if those values are greater than zero, which indicates if the MFR, SF, and $C2_{SF}$ for the polymer satisfies the corresponding inequality.

Table 1A.

| Resin | MFR (g/10 min) | SF (wt.%) | C2$_{SF}$ (wt.%) | R1 > 0 | R2 > 0 | R3 > 0 |
|---|---|---|---|---|---|---|
| PP7414 | 20.3 | 20.4 | 44 | False | False | True |
| 5720WZ | 22 | 21 | 38.8 | True | True | True |

The components for each polymer composition were mixed and extruded into pellets as described above, and a portion of the pellets for each composition were injection molded into bars according to the general procedure described above. The extruded pellets were used to determine the melt flow rate (MFR) exhibited by the polymer composition, and the injection molded bars were tested to determine Izod impact strength as described above. The soluble fraction, ethylene content of the soluble fraction, and $\beta/\alpha$ for each polypropylene impact copolymer (prior to treatment with the compatibilizing agent and/or peroxide) was determined using the Crystex® 42 analyzer according to the methods described above. The results of this testing are set forth in Table 1B below.

Table 1B.

| Sample | 1A | 1B | 1C | 1D | 1E | 1F |
|---|---|---|---|---|---|---|
| Polypropylene grade used | 5720WZ | 5720WZ | 5720WZ | PP7414 | PP7414 | PP7414 |
| soluble fraction (wt. %) | 22.1 | 22.1 | 19.3 | 20.0 | 20.5 | 16.6 |
| $\beta/\alpha$ | 1.92 | 1.31 | 1.76 | 2.27 | 1.75 | 2.13 |
| Peroxide Loading (ppm) | 0 | 600 | 900 | 0 | 500 | 1000 |
| Compatibilizer Loading (ppm) | 0 | 0 | 1800 | 0 | 0 | 2000 |
| MFR (g/10 min) | 21.2 | 81.7 | 52.2 | 20.1 | 65.2 | 67.0 |
| ASTM Break Type | 100%CB | 100%CB | 100%NB | 100%CB | 100%CB | 100%CB |
| Complete Break ASTM IZOD (J/m) | 190 | 90.0 | - | 146 | 99.1 | 131 |
| Hinged Break ASTM IZOD (J/m) | - | - | - | - | - | - |
| Partial Break ASTM IZOD (J/m) | - | - | - | - | - | - |
| Non Break ASTM IZOD (J/m) | - | - | 526 | - | - | - |
| D(4,3) ($\mu$m) | 1.07 | | 0.49 | 0.77 | 1.23 | 0.66 |
| Particle concentration ($\mu$m$^{-3}$) | 0.33 | | 3.4 | 0.85 | 0.21 | 1.4 |

As can be seen from the data in Table 1A, the unmodified 5720WZ resin had a MFR, SF, and C2$_{SF}$ that satisfied inequality 1 (as well as satisfying both of inequalities 2 and 3). When this resin was modified with the compatibilizing agent to yield Sample 1C, the resin showed significantly increased MFR relative to the untreated resin and its impact strength changed from complete break to non-break, which indicates increased impact strength. By way of contrast, such impact behavior was not observed for the PP7414 resin, which failed to satisfy inequality 1 (as well as failing to satisfy inequality 2) and showed complete break failures both before and after modification.

The compatibilizer-modified responsive resin had a particle concentration of 3.4 $\mu$m$^{-3}$, while the non-responsive resin had concentrations of 1.4 $\mu$m$^{-3}$. The PP7414 peroxide-modified resin also had significantly lower particle concentration than the compatibilizer-modified resin.

EXAMPLE 2

This example demonstrates the effect of C2$_{SF}$ on the unmodified heterophasic polyolefin composition in the context of the method of the present invention.

A total of six polymer compositions (Samples 2A-2F) were produced from polypropylene impact copolymers Braskem C702-20 or ExxonMobil PP7654KNE2. The impact copolymer was modified with peroxide alone (Samples 2B and 2E) or with peroxide and compatibilizing agent (Samples 2C and 2F). The peroxide was Varox DBPH available from Vanderbilt Chemicals, LLC. The compatibilizing agent was 2,2-bis[(1,3-pentadienylcarbonyloxy)methyl]butyl 2,4-hexadienoate (CAS # 347377-00-8). The loadings of peroxide and compatibilizing agent are set forth in Table 2B below.

Table 2A tabulates the MFR, SF, and C2$_{SF}$ for the two polymer polypropylene impact copolymers. Substituting those values into the equations for inequalities 1, 2, and 3 above provides values of R1, R2, and R3. Table 2A reports if those values are greater than zero, which indicates if the MFR, SF, and C2$_{SF}$ for the polymer satisfies the corresponding inequality.

Table 2A.

| Resin | MFR (g/10 min) | SF (wt.%) | C2$_{SF}$ (wt.%) | R1 > 0 | R2 > 0 | R3 > 0 |
|---|---|---|---|---|---|---|
| PP7654KNE2 | 15.6 | 22.6 | 48.2 | False | False | True |
| C702-20 | 16.4 | 24.0 | 40.6 | True | True | True |

The components for each polymer composition were mixed and extruded into pellets as described above, and a portion of the pellets for each composition were injection molded into bars according to the general procedure described above. The extruded pellets were used to determine the melt flow rate (MFR) exhibited by the polymer composition, and the injection molded bars were tested to determine Izod impact strength as described above. The soluble fraction and $\beta/\alpha$ for each polypropylene impact copolymer (prior to treatment with the compatibilizing agent and/or peroxide) was determined using Crystex® 42 analyzer according to the methods described above. The results of this testing are set forth in Table 2B below.

Table 2B.

| Sample | 2A | 2B | 2C | 2D | 2E | 2F |
|---|---|---|---|---|---|---|
| Polypropyle ne grade used | C702-20 | C702-20 | C702-20 | PP7654KN E2 | PP7654KN E2 | PP7654KN E2 |
| Peroxide Loading (ppm) | 0 | 500 | 1000 | 0 | 500 | 1000 |
| Compatibili zer loading (ppm) | 0 | 0 | 2000 | 0 | 0 | 2000 |
| MFR (g/10 min) | 16.4 | 57 | 55.7 | 15.6 | 49.4 | 56.4 |
| soluble fraction (wt.%) | 24.0 | 23.8 | 20.8 | 22.6 | 22.5 | 17.3 |
| C2$_{SF}$ (wt.%) | 40.6 | 39.4 | 39.3 | 48.2 | 46.7 | 46 |
| $\beta/\alpha$ | 1.90 | 1.50 | 2.00 | 2.49 | 1.82 | 1.92 |
| ASTM Break Type | 100%C B | 100%C B | 50%P B 50%N B | 100%CB | 100%CB | 100%CB |
| Complete Break ASTM IZOD (J/m) | 158 | 92.3 | - | 164 | 93.7 | 161 |
| Partial Break ASTM IZOD (J/m) | - | - | 205 | - | - | - |
| Non Break ASTM IZOD (J/m) | - | - | 488 | - | - | - |
| D(4,3) ($\mu$m) | 0.78 | 0.87 | 0.57 | 0.94 | 1.18 | 0.6 |
| Particle concentrati on ($\mu$m$^{-3}$) | 0.96 | 0.69 | 2.5 | 0.53 | 0.27 | 2 |

As shown in Table 2A, the unmodified C702-20 resin had a MFR, SF, and C2$_{SF}$ that satisfied inequality 1 (as well as satisfying both of inequalities 2 and 3). This resin, when modified with the compatibilizing agent to produce Sample 2C, showed significantly increased MFR relative to the untreated resin and its impact type changed from complete break to a mixture of partial break and non-break, which indicates increased impact strength. This behavior was not demonstrated by the PP7654KNE2 resin, which failed to satisfy inequality 1 (as well as failing to satisfy inequality 2) and showed complete break failures both before and after modification.

The compatibilizer-modified responsive resin had a particle concentration of 2.5 $\mu$m$^{-3}$, while the non-responsive resin had a concentration of 2.0 $\mu$m$^{-3}$. The peroxide-modified resins also have significantly lower particle concentration than the compatibilizer-modified resins.

EXAMPLE 3

This example demonstrates the effect of soluble fraction in the unmodified heterophasic polyolefin composition in the context of the method of the present invention.

A total of six polymer compositions (Samples 3A-3F) were produced from one of two polypropylene impact copolymers, ExxonMobil PP7143KNE1 or LyondellBasell Pro-fax SD375S. The impact copolymer was modified with peroxide alone (Samples 3B and 3E) or with peroxide and compatibilizing agent (Samples 3C and 3F). The peroxide was Varox DBPH available from Vanderbilt Chemicals, LLC. The compatibilizing agent was 2,2-bis[(1,3-pentadienylcarbonyloxy)methyl]butyl 2,4-hexadienoate (CAS # 347377-00-8). The loadings of peroxide and compatibilizing agent are set forth in Table 3B below.

Table 3A tabulates the MFR, SF, and $C2_{SF}$ for the two polymer polypropylene impact copolymers. Substituting those values into the equations for inequalities 1, 2, and 3 above provides values of R1, R2, and R3. Table 3A reports if those values are greater than zero, which indicates if the MFR, SF, and $C2_{SF}$ for the polymer satisfies the corresponding inequality.

Table 3A.

| Resin | MFR (g/10 min) | SF (wt.%) | $C2_{SF}$ (wt.%) | R1 > 0 | R2 > 0 | R3 > 0 |
|---|---|---|---|---|---|---|
| SD375S | 16.2 | 19.6 | 48.0 | False | False | True |
| PP7143KNE1 | 10.8 | 24.1 | 46.9 | True | True | True |

The components for each polymer composition were mixed and extruded into pellets as described above, and a portion of the pellets for each composition were injection molded into bars according to the general procedure described above. The extruded pellets were used to determine the melt flow rate (MFR) exhibited by the polymer composition, and the injection molded bars were tested to determine Izod impact strength as described above. The soluble fraction and $\beta/\alpha$ for each polypropylene impact copolymer (prior to treatment with the compatibilizing agent and/or peroxide) was determined using Crystex® 42 analyzer according to the methods described above. The results of this testing are set forth in Table 3B below.

Table 3B.

| Sample | 3A | 3B | 3C | 3D | 3E | 3F |
|---|---|---|---|---|---|---|
| Resin | 7143KNE 1 | 7143KNE 1 | 7143KNE 1 | SD375 S | SD375 S | SD375 S |
| Peroxide Loading (ppm) | 0 | 500 | 1000 | 0 | 250 | 500 |
| Compatibiliz er Loading (ppm) | 0 | 0 | 2000 | 0 | 0 | 2000 |
| MFR (g/10 min) | 10.8 | 34.1 | 40.5 | 16.2 | 36.2 | 32.7 |
| soluble fraction (wt.%) | 24.1 | 24.2 | 18.3 | 19.6 | 19.8 | 17.3 |
| $C2_{SF}$ (wt.%) | 46.9 | 45.5 | 41.7 | 48.0 | 48.2 | 46.7 |
| $\beta/\alpha$ | 2.17 | 1.71 | 1.92 | 1.79 | 1.46 | 1.78 |
| Complete Break ASTM IZOD (J/m) | - | 153 | - | 121 | 85.4 | 147 |
| Non-Break ASTM Izod (J/m) | 618 | - | 542 | - | - | - |
| ASTM Break Type | 100% NB | 100% CB | 100% NB | 100%C B | 100%C B | 100%C B |
| D(4,3) ($\mu$m) | 0.83 | 0.88 | 0.58 | 1.1 | 1.31 | 0.93 |
| Particle concentratio n ($\mu$m $^{-3}$) | 0.80 | 0.68 | 2.4 | 0.28 | 0.17 | 0.47 |

The unmodified 7143KNE1 resin had a MFR, SF, and $C2_{SF}$ that satisfied inequality 1 (as well as satisfying both of inequalities 2 and 3). Upon modification with the compatibilizing agent to yield Sample 3C, the resin showed a significant increase in MFR relative to the virgin resin and maintained its non-break behavior, which is highly desirable. Similar behavior was not demonstrated by the SD375S resin, which failed to satisfy inequality 1 (as well as failing to satisfy inequality 2) and showed complete break failures both before and after modification.

The compatibilizer-modified responsive resin, 7143KNE1, had a particle concentration of 2.4 $\mu$m$^{-3}$, while the non-responsive resin, SD375S, had a particle concentration of 0.47 $\mu$m$^{-3}$. The peroxide-modified resins also had significantly lower particle concentration than the compatibilizer-modified resins.

EXAMPLE 4

This example demonstrates the effect of soluble fraction in the unmodified heterophasic polyolefin composition in the context of the method of the present invention.

A total of six polymer compositions (Samples 4A-4F) were produced from one of two polypropylene impact copolymers, Japan Polypropylene BC3F or BC3AD. The impact copolymer was modified with peroxide alone (Samples 4B and 4E) or with peroxide and compatibilizing agent (Samples 4C and 4F). The peroxide was Varox DBPH available from Vanderbilt Chemicals, LLC. The compatibilizing agent was 2,2-bis[(1,3-pentadienylcarbonyloxy)methyl]butyl 2,4-hexadienoate (CAS # 347377-00-8). The loadings of peroxide and compatibilizing agent are set forth in Table 4B below.

Table 4A tabulates the MFR, SF, and $C2_{SF}$ for the two polymer polypropylene impact copolymers. Substituting those values into the equations for inequalities 1, 2, and 3 above provides values of R1, R2, and R3. Table 4A reports if those values are greater than zero, which indicates if the MFR, SF, and $C2_{SF}$ for the polymer satisfies the corresponding inequality.

Table 4A.

| Resin | MFR (g/10 min) | SF (wt.%) | $C2_{SF}$ (wt.%) | R1 > 0 | R2 > 0 | R3 > 0 |
|---|---|---|---|---|---|---|
| BC3AD | 9.54 | 15.1 | 37.0 | False | False | False |
| BC3F | 9.82 | 19.2 | 34.0 | True | True | True |

The components for each polymer composition were mixed and extruded into pellets as described above, and a portion of the pellets for each composition were injection molded into bars according to the general procedure described above. The extruded pellets were used to determine the melt flow rate (MFR) exhibited by the polymer composition, and the injection molded bars were tested to determine Charpy impact strength as described above. The soluble fraction and $\beta/\alpha$ for each polypropylene impact copolymer (prior to treatment with the compatibilizing agent and/or peroxide) was determined using the Crystex® 42 analyze according to the methods described above. The results of this testing are set forth in Table 4B below.

Table 4B.

| Sample | 4A | 4B | 4C | 4D | 4E | 4F |
|---|---|---|---|---|---|---|
| Resin | BC3F | BC3F | BC3F | BC3AD | BC3AD | BC3AD |
| Peroxide Loading (ppm) | 0 | 1000 | 1000 | 0 | 1000 | 1000 |
| Compatibilizer Loading (ppm) | 0 | 0 | 4000 | 0 | 0 | 4000 |
| MFR (g/10 min) | 9.82 | 117 | 26.0 | 9.54 | 97.3 | 34.4 |
| soluble fraction (wt.%) | 19.2 | 19.1 | 14.3 | 15.1 | 15.2 | 12.1 |
| $\beta/\alpha$ | 2.54 | 1.81 | 1.91 | 2.40 | 1.76 | 1.91 |
| $C2_{SF}$ (wt.%) | 34.0 | 33.9 | 32.7 | 37.0 | 36.9 | 36.3 |
| ISO Break Type | 70% CB 30% PB | 100% CB | 100% PB | 100% CB | 100% CB | 100% CB |
| ISO Charpy (kJ/m$^2$) | 16.6 | 8.71 | 41.8 | 10.3 | 7.22 | 12.9 |

As can be seen from the data in Table 4A, the unmodified BC3F resin had a MFR, SF, and $C2_{SF}$ that satisfied inequality 1 (as well as satisfying both of inequalities 2 and 3). When modified with the compatibilizing agent to produce Sample 4C, the BC3F resin showed significantly increased MFR relative to the untreated resin and its impact type changed from complete break to a partial break, indicating increased impact strength. This behavior was not demonstrated by the BC3AD resin, which failed to satisfy inequality 1 (as well as failing to satisfy both inequalities 2 and 3) and showed complete break failures both before and after modification.

EXAMPLE 5

This example demonstrates the effect of soluble fraction in the unmodified heterophasic polyolefin composition in the context of the method of the present invention.

A total of six polymer compositions (Samples 5A-5F) were produced from one of two polypropylene impact copolymers, LyondellBasell Pro-fax SG702 or ExxonMobil PP7033N. The impact copolymers were modified with peroxide alone (Samples 5B and 5E) or with peroxide and compatibilizing agent (Samples 5C and 5F). The peroxide was Varox DBPH available from Vanderbilt Chemicals, LLC. The compatibilizing agent was 2,2-bis[(1,3-pentadienylcarbonyloxy) methyl]butyl 2,4-hexadienoate (CAS # 347377-00-8). The loadings of peroxide and compatibilizing agent are set forth in Table 5B below.

Table 5A tabulates the MFR, SF, and $C2_{SF}$ for the two polymer polypropylene impact copolymers. Substituting those values into the equations for inequalities 1, 2, and 3 above provides values of R1, R2, and R3. Table 5A reports if those values are greater than zero, which indicates if the MFR, SF, and $C2_{SF}$ for the polymer satisfies the corresponding inequality.

Table 5A.

| Resin | MFR (g/10 min) | SF (wt.%) | $C2_{SF}$ (wt.%) | R1 > 0 | R2 > 0 | R3 > 0 |
|---|---|---|---|---|---|---|
| PP7033N | 8.63 | 17.2 | 40.5 | False | False | True |
| SG702 | 18.6 | 25.0 | 41.3 | True | True | True |

The components for each polymer composition were mixed and extruded into pellets as described above, and a portion of the pellets for each composition were injection molded into bars according to the general procedure described above. The extruded pellets were used to determine the melt flow rate (MFR) exhibited by the polymer composition, and the injection molded bars were tested to determine Charpy impact strength as described above. The soluble fraction and $\beta/\alpha$ for each polypropylene impact copolymer (prior to treatment with the compatibilizing agent and/or peroxide) was determined using the Crystex® 42 analyzer according to the methods described above. The results of this testing are set forth in Table 5B below.

Table 5B.

| Sample | 5A | 5B | 5C | 5D | 5E | 5F |
|---|---|---|---|---|---|---|
| Resin | SG702 | SG702 | SG702 | PP7033N | PP7033N | PP7033N |
| Peroxide Loading (ppm) | 0 | 200 | 500 | 0 | 500 | 1000 |
| Compatibilizer Loading (ppm) | 0 | 0 | 2000 | 0 | 0 | 2000 |
| MFR (g/10 min) | 18.6 | 32.2 | 30.5 | 8.63 | 36.2 | 50.0 |
| soluble fraction (wt.%) | 25.0 | 24.2 | 22.9 | 17.2 | 17.1 | 12.3 |
| $\beta/\alpha$ | 1.92 | 1.66 | 1.96 | 2.25 | 1.55 | 1.78 |
| $C2_{SF}$ (wt.%) | 41.3 | 40.7 | 40.2 | 40.5 | 39.0 | 36.2 |
| Break Type | 100% CB | 100% CB | 100% PB | 100%CB | 100%CB | 100%CB |
| Complete Break ASTM IZOD (J/m) | - | - | - | 159 | 93.8 | 130 |
| ISO Izod (J/m) | 85.4 | 77 | 312 | - | - | - |
| D(4,3) ($\mu$m) | 1.08 | 1.09 | 0.56 | 0.81 | 0.71 | 0.56 |
| Particle concentration ($\mu m^{-3}$) | 0.37 | 0.36 | 2.7 | 0.62 | 0.92 | 1.9 |

The data in Table 5A shows that the unmodified SG702 resin had a MFR, SF, and $C2_{SF}$ that satisfied inequality 1 (as well as satisfying both of inequalities 2 and 3). When modified with the compatibilizing agent to yield Sample 5C, this resin showed significantly increased MFR relative to the untreated resin and its impact failure changed from a complete break to a partial break, which indicates an increase in impact strength. Similar behavior was not demonstrated by the PP7033N resin, which failed to satisfy inequality 1 (as well as failing to satisfy inequality 2) and showed complete break failures both before and after modification.

The compatibilizer-modified responsive resin had a particle concentration of 2.7 $\mu m^{-3}$, while the non-responsive resin had a particle concentration of 1.9 $\mu m^{-3}$. The peroxide-modified resins also had significantly lower particle concentration than the compatibilizer-modified resins.

EXAMPLE 6

This example demonstrates the effect of soluble fraction in the unmodified heterophasic polyolefin composition in the context of the method of the present invention.

A total of six polymer compositions (Samples 6A-6F) were produced from one of two polypropylene impact copolymers, Japan Polypropylene NBX03HRS and Prime Polymer J707. The impact copolymer was modified with peroxide alone (Samples 6B and 6E) or with peroxide and compatibilizing agent (Samples 6C and 6F). The peroxide was Varox DBPH available from Vanderbilt Chemicals, LLC. The compatibilizing agent was 2,2-bis[(1,3-pentadienylcarbonyloxy)methyl]butyl 2,4-hexadienoate (CAS # 347377-00-8). The loadings of peroxide and compatibilizing agent are set forth in Table 6B below.

Table 6A tabulates the MFR, SF, and $C2_{SF}$ for the two polymer polypropylene impact copolymers. Substituting those values into the equations for inequalities 1, 2, and 3 above provides values of R1, R2, and R3. Table 6A reports if those values are greater than zero, which indicates if the MFR, SF, and $C2_{SF}$ for the polymer satisfies the corresponding inequality.

Table 6A.

| Resin | MFR (g/10 min) | SF (wt.%) | $C2_{SF}$ (wt.%) | R1 > 0 | R2 > 0 | R3 > 0 |
|---|---|---|---|---|---|---|
| J707 | 30.5 | 15.0 | 35.3 | False | False | False |
| NBX03HRS | 28.2 | 28.0 | 39.2 | True | True | True |

The components for each polymer composition were mixed and extruded into pellets as described above, and a portion of the pellets for each composition were injection molded into bars according to the general procedure described above. The extruded pellets were used to determine the melt flow rate (MFR) exhibited by the polymer composition, and the injection molded bars were tested to determine Izod impact strength as described above. The soluble fraction and $\beta/\alpha$ for each polypropylene impact copolymer (prior to treatment with the compatibilizing agent and/or peroxide) was determined using the Crystex® 42 analyzer according to the methods described above. The results of this testing are set forth in Table 6B below.

Table 6B.

| Sample | 6A | 6B | 6C | 6D | 6E | 6F |
|---|---|---|---|---|---|---|
| Resin | NBX03HR S | NBX03HR S | NBX03HR S | J707 | J707 | J707 |
| Peroxide Loading (ppm) | 0 | 500 | 1000 | 0 | 250 | 500 |
| Compatibiliz er Loading (ppm) | 0 | 0 | 2000 | 0 | 0 | 1000 |
| MFR (g/10 min) | 28.2 | 83.2 | 77.5 | 30.5 | 62.5 | 66.1 |
| soluble fraction (wt.%) | 28.0 | 28.7 | 26.8 | 15.0 | 14.5 | 13.5 |
| $C2_{SF}$ (wt.%) | 39.2 | 38.6 | 39.0 | 35.3 | 30.9 | 30.2 |
| $\beta/\alpha$ | 2.36 | 1.85 | 2.43 | 1.58 | 1.39 | 1.51 |
| ASTM Break Type | 100%NB | 100%CB | 100%NB | 100%C B | 100%C B | 100%C B |
| Complete Break ASTM IZOD (J/m) | - | 125 | - | 94.7 | 75.4 | 82.3 |
| Non Break ASTM IZOD (J/m) | 627 | - | 559 | - | - | - |
| D(4,3) ($\mu$m) | 0.70 | 0.85 | 0.44 | 0.74 | | 0.52 |
| Particle concentratio n ($\mu m^{-3}$) | 1.6 | 0.82 | 6.3 | 0.68 | | 2.0 |

As can be seen from the data in Table 6A, the unmodified NBX03HRS resin had a MFR, SF, and $C2_{SF}$ that satisfied inequality 1 (as well as satisfying both of inequalities 2 and 3). Further, this resin, when modified with the compatibilizing agent to produce Sample 6C, showed significantly increased MFR relative to the untreated resin and its impact strength maintained non-break behavior, which is desirable. This behavior was not demonstrated by the J707 resin, which failed to satisfy inequality 1 (as well as failing to satisfy both inequalities 2 and 3) and showed complete break failures both before and after modification.

The compatibilizer-modified responsive resin (Sample 6C) had a particle concentration of 6.3 $\mu m^{-3}$, while the non-responsive resin had a particle concentration of 2.0 $\mu m^{-3}$. The peroxide-modified NBX03HRS (Sample 6 B) also had significantly lower particle concentration than the compatibilizer-modified example.

**Claims**

1. A method for making a modified polymer composition, comprising

   (a) feeding

      (i) a heterophasic thermoplastic polymer composition which comprises a propylene continuous phase and an ethylene discontinuous phase, and has a melt flow rate (MFR, expressed in g/10 min), a soluble fraction (SF, expressed in wt.%), and an ethylene content of the soluble fraction ($C2_{SF}$, expressed in wt.%) and wherein MFR, SF and $C2_{SF}$ were determined according to the methods described in the description and satisfying the following inequality:

$$0 < (-0.29 \times MFR) + (1.269 \times SF) - (0.626 \times C2_{SF}) + 5.9;$$

      (ii) a compatibilizing agent comprising an ester compound formally derived from a polyol comprising three or more hydroxy groups and an aliphatic carboxylic acid comprising one or more carbon-carbon double bonds; and
      (iii) a peroxide compound

   to a melt mixing apparatus; and
   (b) processing the same in the melt mixing apparatus at a temperature exceeding the melting point of the composition (i) to form a polymer composition.

2. A method for making a modified polymer composition, comprising

   (a) combining

      (i) a heterophasic thermoplastic polymer composition which comprises a propylene continuous phase and an ethylene discontinuous phase, and has a melt flow rate (MFR, expressed in g/10 min), a soluble fraction (SF, expressed in wt.%), and an ethylene content of the soluble fraction ($C2_{SF}$, expressed in wt.%) and wherein MFR, SF and $C2_{SF}$ were determined according to the methods described in the description and satisfying the following inequality:

$$0 < (-0.29 \times MFR) + (1.269 \times SF) - (0.626 \times C2_{SF}) + 5.9;$$

      (ii) a compatibilizing agent comprising an ester compound formally derived from a polyol comprising three or more hydroxy groups and an aliphatic carboxylic acid comprising one or more carbon-carbon double bonds; and
      (iii) a peroxide compound;
      to produce an intermediate composition;

   (b) heating the intermediate composition to a temperature exceeding the melting point of the composition (i);
   (c) mixing the intermediate composition to produce a polymer composition; and
   (d) cooling the polymer composition to a temperature at which it solidifies.

3. The method of claim 1 or 2, wherein the propylene continuous phase is selected from polypropylene homopolymers and copolymers of propylene and ≤ 50 wt.% of one or more comonomers selected from ethylene and $C_{4-10}$-($\alpha$-olefin) monomers.

4.  The method of any of claims 1-3, wherein the ethylene discontinuous phase is selected from ethylene homopolymers and copolymers of ethylene and a comonomer selected from $C_{3-10}$-($\alpha$-olefin) monomers; and preferably is a copolymer of ethylene and propylene.

5.  The method of any of claims 1-4, wherein the ester compound is formally derived by linking each of the hydroxy groups of the polyol with an aliphatic carboxylic acid; and preferably is 2,2-bis[(1,3-pentadienylcarbonyloxy) methyl]butyl 2,4-hexadienoate.

6.  The method of any of claims 1-5, wherein the polyol is 2-(hydroxymethyl)-2-ethylpropane-1,3-diol.

7.  The method of any of claims 1-6, wherein the aliphatic carboxylic acid (i) comprises two or more carbon-carbon double bonds, and at least two of the carbon-carbon double bonds are conjugated and/or (ii) is selected from aliphatic $C_{6-10}$-carboxylic acids; and preferably s 2,4-hexadienoic acid.

8.  The method of any of claims 1-7, wherein the peroxide compound is 2,5-dimethyl-2,5-di(*tert*-butylperoxy)hexane.

9.  A composition, which is a modified polymer composition comprising:

    (a) a heterophasic thermoplastic polymer composition comprising a propylene continuous phase and an ethylene discontinuous phase; and
    (b) a compatibilizing agent comprising an ester compound formally derived from (i) a polyol comprising three or more hydroxy groups and (ii) an aliphatic carboxylic acid comprising one or more carbon-carbon double bonds,

    wherein the ethylene discontinuous phase is present in the form of discrete particles dispersed in the propylene continuous phase, and the discrete particles of the ethylene discontinuous phase are present in the modified polymer composition in a concentration of ≥ 2.1 particles per $\mu m^3$, determined according to the method as described in the description.

10. The composition of claim 9, wherein the propylene continuous phase is selected from polypropylene homopolymers and copolymers of propylene and ≤ 50 wt.% of one or more comonomers selected from ethylene and $C_{4-10}$-($\alpha$-olefin) monomers.

11. The composition of claim 9 or 10, wherein the ethylene discontinuous phase is selected from ethylene homopolymers and copolymers of ethylene and a comonomer selected from $C_{3-10}$-($\alpha$-olefin) monomers, and preferably is a copolymer of ethylene and propylene.

12. The composition of any of claims 9-11, wherein the ester compound is formally derived by linking each of the hydroxy groups of the polyol with an aliphatic carboxylic acid, and preferably is 2,2-bis[(1,3-pentadienylcarbonyloxy)methyl] butyl 2,4-hexadienoate.

13. The composition of any of claims 9-12, wherein the polyol is 2-(hydroxymethyl)-2-ethylpropane-1,3-diol.

14. The composition of any of claims 9-13, wherein the aliphatic carboxylic acid (i) comprises two or more carbon-carbon double bonds, and at least two of the carbon-carbon double bonds are conjugated and/or (ii) is selected from aliphatic $C_{6-10}$-carboxylic acids, and preferably is 2,4-hexadienoic acid.

**Patentansprüche**

1.  Verfahren zur Herstellung einer modifizierten Polymerzusammensetzung, umfassend

    (a) Zuführen

        (i) einer heterophasischen thermoplastischen Polymerzusammensetzung, die eine kontinuierliche Propylenphase und eine diskontinuierliche Ethylenphase umfasst, und eine Schmelzflussrate (MFR, ausgedrückt in g/10 min), eine lösliche Fraktion (SF, ausgedrückt in Gew.-%) und einen Ethylengehalt der löslichen Fraktion (C2$_{SF}$, ausgedrückt in Gew.-%) aufweist, und wobei MFR, SF and C2$_{SF}$ gemäß den Verfahren, die in der Beschreibung beschrieben sind, ermittelt werden, und wobei die folgende Ungleichung erfüllt wird:

$$0 < (-0.29 \times MFR) + (1.269 \times SF) - (0.626 \times C2_{SF}) + 5.9;$$

(ii) eines Kompatibilisierungsmittels, umfassend eine Esterverbindung, die formal von einem Polyol mit drei oder mehr Hydroxygruppen und einer aliphatischen Carbonsäure mit einer oder mehreren Kohlenstoff-Kohlenstoff-Doppelbindungen abgeleitet ist; und
(iii) einer Peroxidverbindung

in eine Schmelzmischvorrichtung; und
(b) Verarbeiten derselben in der Schmelzmischvorrichtung bei einer Temperatur, die den Schmelzpunkt der Zusammensetzung (i) übersteigt, um eine Polymerzusammensetzung zu bilden.

2. Verfahren zur Herstellung einer modifizierten Polymerzusammensetzung, umfassend

(a) Kombinieren

(i) einer heterophasischen thermoplastischen Polymerzusammensetzung, die eine kontinuierliche Propylenphase und eine diskontinuierliche Ethylenphase umfasst und eine Schmelzflussrate (MFR, ausgedrückt in g/10 min), eine lösliche Fraktion (SF, ausgedrückt in Gew.-%) und einen Ethylengehalt der löslichen Fraktion (C2$_{SF}$, ausgedrückt in Gew.-%) aufweist, und wobei MFR, SF and C2$_{SF}$ gemäß den Verfahren, die in der Beschreibung beschrieben sind, ermittelt werden, und wobei die folgende Ungleichung erfüllt wird:

$$0 < (-0.29 \times MFR) + (1.269 \times SF) - (0.626 \times C2_{SF}) + 5.9;$$

(ii) eines Kompatibilisierungsmittels, umfassend eine Esterverbindung, die formal von einem Polyol mit drei oder mehr Hydroxygruppen und einer aliphatischen Carbonsäure mit einer oder mehreren Kohlenstoff-Kohlenstoff-Doppelbindungen abgeleitet ist; und
(iii) einer Peroxidverbindung;

um eine intermediäre Zusammensetzung herzustellen;
(b) Erhitzen der intermediären Zusammensetzung auf eine Temperatur, die über dem Schmelzpunkt der Zusammensetzung (i) liegt;
(c) Mischen der intermediären Zusammensetzung, um eine Polymerzusammensetzung herzustellen; und
(d) Abkühlen der Polymerzusammensetzung auf eine Temperatur, bei der sie sich verfestigt.

3. Verfahren gemäß Anspruch 1 oder 2, wobei die kontinuierliche Propylenphase ausgewählt ist aus Polypropylen-Homopolymeren und Copolymeren von Propylen und ≤ 50 Gew.-% eines oder mehrerer Comonomere, die ausgewählt sind aus Ethylen und C$_{4-10}$-($\alpha$-Olefin)-Monomeren.

4. Verfahren gemäß mindestens einem der Ansprüche 1 bis 3, wobei die diskontinuierliche Ethylenphase ausgewählt ist aus Ethylenhomopolymeren und Copolymeren von Ethylen und einem Comonomer, das ausgewählt ist aus C$_{3-10}$-($\alpha$-Olefin)-Monomeren, und vorzugsweise ein Copolymer von Ethylen und Propylen ist.

5. Verfahren gemäß mindestens einem der Ansprüche 1 bis 4, wobei die Esterverbindung formal durch Verknüpfung jeder der Hydroxygruppen des Polyols mit einer aliphatischen Carbonsäure abgeleitet ist und vorzugsweise 2,2-Bis[(1,3-pentadienylcarbonyloxy)methyl]butyl-2,4-hexadienoat ist.

6. Verfahren gemäß mindestens einem der Ansprüche 1 bis 5, wobei das Polyol 2-(Hydroxymethyl)-2-ethylpropan-1,3-diol ist.

7. Verfahren gemäß mindestens einem der Ansprüche 1 bis 6, wobei die aliphatische Carbonsäure (i) zwei oder mehr Kohlenstoff-Kohlenstoff-Doppelbindungen umfasst und mindestens zwei der Kohlenstoff-Kohlenstoff-Doppelbindungen konjugiert sind und/oder (ii) ausgewählt ist aus aliphatischen C$_{6-10}$-Carbonsäuren, und vorzugsweise 2,4-Hexadiensäure ist.

8. Verfahren gemäß mindestens einem der Ansprüche 1 bis 7, wobei die Peroxidverbindung 2,5-Dimethyl-2,5-di(tert-Butylperoxy)hexan ist.

9. Zusammensetzung, die eine modifizierte Polymerzusammensetzung ist, umfassend:

(a) eine heterophasische thermoplastische Polymerzusammensetzung, umfassend eine kontinuierliche Propylenphase und eine diskontinuierliche Ethylenphase; und
(b) ein Kompatibilisierungsmittel, umfassend eine Esterverbindung, die formal abgeleitet ist von (i) einem Polyol mit drei oder mehr Hydroxygruppen, und (ii) einer aliphatischen Carbonsäure mit einer oder mehreren Kohlenstoff-Kohlenstoff-Doppelbindungen,

wobei die diskontinuierliche Ethylenphase in Form von diskreten Teilchen vorliegt, die in der kontinuierlichen Propylenphase dispergiert sind, und die diskreten Teilchen der diskontinuierlichen Ethylenphase in der modifizierten Polymerzusammensetzung in einer Konzentration von $\geq 2{,}1$ Teilchen pro $\mu m^3$ vorhanden sind, ermittelt gemäß dem Verfahren wie in der Beschreibung beschrieben.

10. Zusammensetzung gemäß Anspruch 9, wobei die kontinuierliche Propylenphase ausgewählt ist aus Polypropylen-Homopolymeren und Copolymeren von Propylen und $\leq 50$ Gew.-% eines oder mehrerer Comonomere, die ausgewählt sind aus Ethylen und $C_{4\text{-}10}$-($\alpha$-Olefin)-Monomeren.

11. Zusammensetzung gemäß Anspruch 9 oder 10, wobei die diskontinuierliche Ethylenphase ausgewählt ist aus Ethylenhomopolymeren und Copolymeren von Ethylen und einem Comonomer, das ausgewählt ist aus $C_{3\text{-}10}$-($\alpha$-Olefin)-Monomeren, und vorzugsweise ein Copolymer von Ethylen und Propylen ist.

12. Zusammensetzung gemäß mindestens einem der Ansprüche 9 bis 11, wobei die Esterverbindung formal durch Verknüpfung jeder der Hydroxygruppen des Polyols mit einer aliphatischen Carbonsäure abgeleitet ist, und vorzugsweise 2,2-Bis[(1,3-pentadienylcarbonyloxy)methyl]butyl-2,4-hexadienoat ist.

13. Zusammensetzung gemäß mindestens einem der Ansprüche 9 bis 12, wobei das Polyol 2-(Hydroxymethyl)-2-ethylpropan-1,3-diol ist.

14. Zusammensetzung gemäß mindestens einem der Ansprüche 9 bis 13, wobei die aliphatische Carbonsäure (i) zwei oder mehr Kohlenstoff-Kohlenstoff-Doppelbindungen umfasst und mindestens zwei der Kohlenstoff-Kohlenstoff-Doppelbindungen konjugiert sind und/oder (ii) ausgewählt ist aus aliphatischen $C_{6\text{-}10}$-Carbonsäuren, und vorzugsweise 2,4-Hexadiensäure ist.

## Revendications

1. Procédé de production d'une composition polymère modifiée, comprenant

(a) une introduction

(i) d'une composition polymère thermoplastique hétérophasique qui comprend une phase continue de propylène et une phase discontinue d'éthylène, et présente un indice de fluidité (MFR, exprimé en g/10 min), une fraction soluble (SF, exprimée en % en poids), et une teneur en éthylène de la fraction soluble (C2$_{SF}$, exprimée en % en poids)
et dans lequel MFR, SF et C2$_{SF}$ ont été déterminés en fonction des procédés décrits dans la description et satisfaisant l'inégalité suivante :

$$0 < (-0{,}29 \times MFR) + (1{,}269 \times SF) - (0{,}626 \times C2_{SF}) + 5{,}9 \; ;$$

(ii) d'un agent de compatibilité comprenant un composé ester formellement dérivé d'un polyol comprenant trois groupes hydroxy ou plus et un acide carboxylique aliphatique comprenant une ou plusieurs doubles liaisons carbone-carbone ; et
(iii) d'un composé peroxyde

dans un appareil de mélange par fusion ; et

(b) un traitement de ceux-ci dans l'appareil de mélange par fusion à une température dépassant le point de fusion de la composition (i) pour former une composition polymère.

2. Procédé de production d'une composition polymère modifiée, comprenant

(a) une combinaison

(i) d'une composition polymère thermoplastique hétérophasique qui comprend une phase continue de propylène et une phase discontinue d'éthylène, et présente un indice de fluidité (MFR, exprimé en g/10 min), une fraction soluble (SF, exprimée en % en poids), et une teneur en éthylène de la fraction soluble (C2SF, exprimée en % en poids)

et dans lequel MFR, SF et $C2_{SF}$ ont été déterminés en fonction des procédés décrits dans la description et satisfaisant l'inégalité suivante :

$$0 < (-0,29 \times MFR) + (1,269 \times SF) - (0,626 \times C2_{SF}) + 5,9 \, ;$$

(ii) d'un agent de compatibilité comprenant un composé ester formellement dérivé d'un polyol comprenant trois groupes hydroxy ou plus et un acide carboxylique aliphatique comprenant une ou plusieurs doubles liaisons carbone-carbone ; et

(iii) d'un composé peroxyde ;

pour produire une composition intermédiaire ;

(b) un chauffage de la composition intermédiaire à une température dépassant le point de fusion de la composition (i) ;

(c) un mélange de la composition intermédiaire pour produire une composition polymère ; et

(d) un refroidissement de la composition polymère à une température à laquelle elle se solidifie.

3. Procédé selon la revendication 1 ou 2, dans lequel la phase continue de propylène est sélectionnée parmi les homopolymères de polypropylène et les copolymères de propylène et ≤ 50 % en poids d'un ou plusieurs comonomères sélectionnés parmi l'éthylène et les monomères en $C_{4-10}$-($\alpha$-oléfine).

4. Procédé selon l'une quelconque des revendications 1 à 3, dans lequel la phase discontinue d'éthylène est sélectionnée parmi les homopolymères d'éthylène et les copolymères d'éthylène et un comonomère sélectionné parmi les monomères en $C_{3-10}$-($\alpha$-oléfine) ; et préférablement est un copolymère d'éthylène et de propylène.

5. Procédé selon l'une quelconque des revendications 1 à 4, dans lequel le composé ester est formellement dérivé en liant chacun des groupes hydroxy du polyol à un acide carboxylique aliphatique; et préférablement est du 2,2-bis[(1,3-pentadiénylcarbonyloxy) méthyl]butyl 2,4-hexadiénoate.

6. Procédé selon l'une quelconque des revendications 1 à 5, dans lequel le polyol est du 2-(hydroxyméthyl)-2-éthylpropane-1,3-diol.

7. Procédé selon l'une quelconque des revendications 1 à 6, dans lequel l'acide carboxylique aliphatique (i) comprend deux doubles liaisons carbone-carbone ou plus, et au moins deux des doubles liaisons carbone-carbone sont conjuguées et/ou (ii) est sélectionné parmi les acides carboxyliques en $C_{6-10}$ aliphatiques ; et préférablement est l'acide 2,4-hexadiénoïque.

8. Procédé selon l'une quelconque des revendications 1 à 7, dans lequel le composé peroxyde est du 2,5-diméthyl-2,5-di(tert-butylperoxy)hexane.

9. Composition, qui est une composition polymère modifiée comprenant :

(a) une composition polymère thermoplastique hétérophasique comprenant une phase continue de propylène et une phase discontinue d'éthylène ; et

(b) un agent de compatibilité comprenant un composé ester formellement dérivé de (i) un polyol comprenant trois groupes hydroxy ou plus et (ii) un acide carboxylique aliphatique comprenant une ou plusieurs doubles liaisons carbone-carbone,

dans laquelle la phase discontinue d'éthylène est présente sous la forme de particules discrètes dispersées dans la phase continue de propylène, et les particules discrètes de la phase discontinue d'éthylène sont présentes dans la composition polymère modifiée en une concentration de $\geq 2,1$ particules par $\mu m^3$, déterminée selon le procédé tel que décrit dans la description.

10. Composition selon la revendication 9, dans laquelle la phase continue de propylène est sélectionnée parmi les homopolymères de polypropylène et les copolymères de propylène et $\leq 50$ % en poids d'un ou plusieurs comonomères sélectionnés parmi l'éthylène et les monomères en $C_{4-10}$-($\alpha$-oléfine).

11. Composition selon la revendication 9 ou 10, dans laquelle la phase discontinue d'éthylène est sélectionnée parmi les homopolymères d'éthylène et les copolymères d'éthylène et un comonomère sélectionné parmi les monomères en $C_{3-10}$-($\alpha$-oléfine), et préférablement est un copolymère d'éthylène et de propylène.

12. Composition selon l'une quelconque des revendications 9 à 11, dans laquelle le composé ester est formellement dérivé en liant chacun des groupes hydroxy du polyol à un acide carboxylique aliphatique, et préférablement est du 2,2-bis[(1,3-pentadiénylcarbonyloxy)méthyl]butyl 2,4-hexadiénoate.

13. Composition selon l'une quelconque des revendications 9 à 12, dans laquelle le polyol est du 2-(hydroxyméthyl)-2-éthylpropane-1,3-diol.

14. Composition selon l'une quelconque des revendications 9 à 13, dans laquelle l'acide carboxylique aliphatique (i) comprend deux doubles liaisons carbone-carbone ou plus, et au moins deux des doubles liaisons carbone-carbone sont conjuguées et/ou (ii) est sélectionné parmi les acides carboxyliques en $C_{6-10}$ aliphatiques, et préférablement est l'acide 2,4-hexadiénoïque.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018156278 A1
- EP 3347389 A1
- US 5639822 A
- US 7649052 B2
- US 8207272 B2
- EP 1391482 B1
- US 5049605 A
- US 7157510 B
- US 7262236 B

**Non-patent literature cited in the description**

- **A. D. MCNAUGHT** ; **A. WILKINSON**. IUPAC. Compendium of Chemical Terminology. Blackwell Scientific Publications, 1997
- *CHEMICAL ABSTRACTS*, 6683-19-8
- *CHEMICAL ABSTRACTS*, 2082-79-3
- *CHEMICAL ABSTRACTS*, 31570-04-4
- *CHEMICAL ABSTRACTS*, 26741-53-7
- *CHEMICAL ABSTRACTS*, 129757-67-1
- *CHEMICAL ABSTRACTS*, 41556-26-7
- *CHEMICAL ABSTRACTS*, 82919-37-7
- *CHEMICAL ABSTRACTS*, 123-28-4
- *CHEMICAL ABSTRACTS*, 693-36-7
- *CHEMICAL ABSTRACTS*, 119345-01-6
- *CHEMICAL ABSTRACTS*, 347377-00-8